# EUROPEAN PATENT SPECIFICATION

(11) **EP 3 900 604 B1**
(45) Date of publication and mention of the grant of the patent: **21.02.2024**
(21) Application number: 19898602.8
(22) Date of filing: 20.12.2019
(51) Int. Cl.: A47L 11/40, A47L 11/24, A47L 9/00

(54) **CLEANING ROBOT AND CONTROL METHOD THEREFOR, AND GROUND TREATMENT SYSTEM**
REINIGUNGSROBOTER UND STEUERUNGSVERFAHREN DAFÜR UND BODENBEHANDLUNGSSYSTEM
ROBOT DE NETTOYAGE ET SON PROCÉDÉ DE COMMANDE, ET SYSTÈME DE TRAITEMENT AU SOL

(30) Priority: 21.12.2018 CN 201811572174; 29.03.2019 CN 201910250331
(43) Date of publication of application: 27.10.2021
(73) Proprietor: Positec Power Tools (Suzhou) Co., Ltd, Suzhou, Jiangsu 215123 (CN)
(72) Inventor: ZHANG, Shisong, Suzhou, Jiangsu 215123 (CN); WU, Hongbing, Suzhou, Jiangsu 215123 (CN); XIE, Mingjian, Suzhou, Jiangsu 215123 (CN); XU, Jianqiang, Suzhou, Jiangsu 215123 (CN); ZHONG, Hongfeng, Suzhou, Jiangsu 215123 (CN); LI, Ji, Suzhou, Jiangsu 215123 (CN)
(74) Representative: Kilburn & Strode LLP
(86) International application number: PCT/CN2019/127059
(87) International publication number: WO 2020/125760

(56) References cited:
- EP-A1- 2 303 085
- WO-A1-2018/107465
- CN-A- 106 805 851
- CN-A- 106 889 955
- CN-A- 108 514 385
- DE-A1-102016 124 684

## Description

### BACKGROUND

### Technical Field

The present invention relates to the field of robots, and in particular, to a cleaning robot, a control method thereof, and a ground treatment system.

### Related Art

With the development of science and technology, intelligent cleaning robots are well known to people. Moreover, similar domestic service robots such as smart sweepers or smart mopping machines, with features of convenient cleaning and being time-saving and laborsaving, get people out of tedious housework and enter the family life of ordinary people.

A current smart mopping machine or smart sweeping and mopping integrated machine is equipped with a mop to wipe a ground, thereby improving the degree of cleanliness of the ground. During work, the cleaning robot often encounters indoor obstacles such as a step and a threshold. When encountering these obstacles, the machine cannot cross the obstacles and chooses to avoid these obstacles in most cases. Moreover, a growing number of ornaments such as a carpet are used in the existing indoor environment. When the cleaning robot moves to the carpet, a case that a mop interferes with the carpet and the carpet is consequently dirtied by stains on the mop often occurs. Especially, after the cleaning robot has mopped the ground for a period of time, when the mop needs to be replaced or the cleaning robot needs to be switched to another room, for example, from a kitchen to a bedroom, if the mop is not lifted in time, the cleaned ground is often dirtied again or cross contamination is often caused. In addition, manual intervention is required for removing a dirty mop from the machine or replacing a dirty mop with a new mop. As a result, the degree of intelligence is not high.

Prior art cleaning robots are disclosed in CN 106 889 955 A, WO 2018/107465 A1, DE 10 2016 124684 A1, EP 2 303 085 A1, CN 106 805 851 A and CN 108 514 385 A.

### SUMMARY

To overcome defects of the prior art, the problem that the present invention needs to resolve is to provide a cleaning robot that can automatically lift and unload a cleaning device, a control method thereof, and a ground treatment system.

A technical solution adopted in the present invention to resolve the existing technical problem is as follows:
A cleaning robot, comprising: a body;
a moving device, configured to support the body and drive the cleaning robot to move on a working surface;
a cleaning device, configured to be mounted on the body and perform cleaning work on the working surface;
a control device, configured to control the moving device to drive the cleaning robot to move; and
a power device, configured to supply power to the moving device, wherein
the cleaning device comprises a mopping module, and the mopping module is detachably mounted on the body; the cleaning robot further comprises a lifting device, the lifting device comprises a lifting mechanism and a support member, and the control device is capable of controlling the lifting mechanism to lift the mopping module from a first position relative to the working surface to a second position; the support member is configured to provide a support point that is relative to the working surface and that is different from the moving device when the mopping module is lifted; and the control device is capable of controlling the mopping module to be separated from the body at least in the second position.

In an embodiment, wherein the support member comprises a support wheel.

In an embodiment, the cleaning robot is a domestic and/or indoor service robot.

In an embodiment, wherein the mopping module comprises a mopping plate, and the mopping plate is configured to detachably mount a wiping member.

In an embodiment, a liquid tank is further included, and the control device controls the liquid tank to supply liquid to the mopping module when the cleaning robot works and stop supplying liquid to the mopping module when the mopping module is lifted.

In an embodiment, the mopping module is disposed at a front end of the bottom of the body.

In an embodiment, the support point is located between the mopping module and the moving device.

In an embodiment, the support point is located in front of the mopping module.

In an embodiment, wherein an action force of the support member on the working surface when the mopping module is in the second position is greater than an action force of the support member on the working surface when the mopping module is in the first position.

In an embodiment, wherein the lifting mechanism comprises a mopping module lifting mechanism capable of driving the mopping module to be lifted from the first position relative to the working surface to the second position.

In an embodiment, wherein the mopping module lifting mechanism comprises an elevating mechanism, the elevating mechanism comprises an elevating motor and a transmission mechanism, and the elevating motor drives the transmission mechanism to drive the mopping module to move upward or downward.

In an embodiment, the transmission mechanism includes a first linkage mechanism formed by a four-stage link, the first linkage mechanism includes: a first link mechanism of which one end is fixedly connected to the elevating motor, a second link mechanism of which one end is linked to the other end of the first link mechanism, a third link mechanism of which one end is rotatably connected to the body and the other end is linked to the other end of the second link mechanism, and a fourth link mechanism of which one end is linked to the other end of the third link mechanism and the other end is linked to the mopping module, and the elevating motor drives the first linkage mechanism to drive the mopping module to move upward or downward.

In an embodiment, the transmission mechanism includes a second linkage mechanism formed by a two-stage link, the second linkage mechanism includes: a fifth link mechanism fixedly connected to the elevating motor, where one end of the fifth link mechanism is linked to one end of a sixth link mechanism, and the other end of the sixth link mechanism is linked to the mopping module, and the elevating motor drives the second linkage mechanism to drive the mopping module to move upward or downward

In an embodiment, the transmission mechanism includes a first cam mechanism, an edge of the first cam mechanism is partially connected to the mopping module, the elevating motor drives the first cam mechanism to rotate, and the first cam mechanism drives the mopping module to move upward or downward.

In an embodiment, the transmission mechanism further includes an elevating frame, the first cam mechanism is mounted in the elevating frame, the first cam mechanism is connected to the mopping module by the elevating frame, the elevating motor drives the first cam mechanism to rotate, the first cam mechanism drives the elevating frame to move upward or downward, and the elevating frame drives the mopping module to move upward or downward.

In an embodiment, the transmission mechanism includes a gear and screw rod meshed device or a belt transmission device.

In an embodiment, the mopping module lifting mechanism includes a swing mechanism, and the swing mechanism drives the cleaning device to swing, so that the mopping module is lifted from a first position relative to a working surface to a second position.

In an embodiment, the transmission mechanism further includes a second cam mechanism or a rod mechanism, the elevating motor drives the second cam mechanism or the rod mechanism to rotate, and when being in contact with the mopping module, the second cam mechanism or the rod mechanism is capable of applying a downward action force to the mopping module, so that the mopping module is separated from the body.

In an embodiment, the body further includes a limit device, the limit device includes a first bevel and a second bevel, and when the mopping module is in the first position, a first part edge of the second cam mechanism abuts against the first bevel; and when the mopping module is in a separated position, a second part edge of the second cam mechanism abuts against the second bevel.

In an embodiment, wherein the transmission mechanism comprises a first cam mechanism, the elevating motor drives the first cam mechanism to rotate, and the first cam mechanism drives the mopping module to move upward or downward, the first cam mechanism moves synchronously with the second cam mechanism or the rod mechanism.

In an embodiment, wherein the transmission mechanism further comprises an elevating frame, the first cam mechanism is disposed in the elevating frame, the mopping module is mounted on the elevating frame, the elevating motor drives the first cam mechanism to rotate, the first cam mechanism drives the elevating frame to move upward or downward, and the elevating frame drives the mopping module to move upward or downward.

In an embodiment, further comprising an unloading device, wherein the unloading device is disposed on the body, and the control device is capable of controlling the unloading device to cause the mopping module to be separated from the body at least in the second position.

In an embodiment, the unloading device includes an electromagnet, matching a magnet on the mopping module, and the control device controls attraction or separation between the mopping module and the body by controlling a magnitude or a direction of a current passing through the electromagnet.

In an embodiment, the unloading device includes a push-pull electromagnet and a push rod engaged with an iron core of the push-pull electromagnet, and the control device controls, by electrifying the push-pull electromagnet, the push rod to act on the mopping module, so that the mopping module is separated from the body at least in the second position.

In an embodiment, the unloading device is a protrusion device, the protrusion device extends downwards along the body, and the control device controls the protrusion device to move relative to the mopping module and be in contact with the mopping module, so that the mopping module is separated from the body at least in the second position.

In an embodiment, the unloading device includes a cam device, the cam device includes a cam mechanism and a driving motor, the control device controls the driving motor to drive the cam mechanism to rotate, and when being in contact with the mopping module, the cam mechanism is capable of applying a downward action force to the mopping module, so that the mopping module is separated from the body at least in the second position.

In an embodiment, the unloading device includes a rod device, the rod device includes a rod mechanism and a driving motor, the control device controls the driving motor to drive the rod mechanism to rotate, and when being in contact with the mopping module, the rod mechanism is capable of applying a downward action force to the mopping module, so that the mopping module is separated from the body at least in the second position.

In an embodiment, further comprising a mopping module detection device, wherein the mopping module detection device is disposed on the body and is configured to detect whether the mopping module is disposed on the body and send a detection signal to the control device, and the control device determines, based on presence or absence of the detection signal, whether the mopping module is disposed on the body.

In an embodiment, a mopping module position detection device is further included, the mopping module position detection device is disposed on the body, a position mark is disposed on the mopping module lifting mechanism, and the position detection device is configured to detect the position mark and output a detection signal; and the control device determines a position of the mopping module relative to the working surface by comparing the detection signal with a preset value.

In an embodiment, the mopping module position detection device includes a magnetic detection sensor, and the position mark is a magnetic element.

In an embodiment, the magnetic detection sensor is a Hall sensor, and the magnetic element is a magnet or a magnetic steel.

In an embodiment, wherein the support member is movably connected to the body, and a distance between the support member and the top of the body when the mopping module is in the second position is greater than a distance between the support member and the top of the body when the mopping module is in the first position.

In an embodiment, wherein the lifting device comprises a support member adjustment mechanism, and the support member adjustment mechanism drives the support member to fall when the mopping module is lifted, and drives the support member to be retracted when the mopping module falls.

In an embodiment, wherein the support member adjustment mechanism is linked to the mopping module lifting mechanism.

In an embodiment, the support member adjustment mechanism includes a gear and rack meshed device or a link device.

In an embodiment, the lifting device includes an elastic member, and the elastic member connects the support member and the body.

In an embodiment, wherein the lifting mechanism comprises a movable support mechanism, and the movable support mechanism connects the support member and the body; the control device controls the movable support mechanism to drive the support member to move to an extended position, so that the mopping module is lifted from the first position relative to the working surface to the second position; and the control device controls the movable support mechanism to drive the support member to move to a retracted position, so that the mopping module falls from the second position relative to the working surface to the first position.

In an embodiment, the movable support mechanism includes a swing mechanism or an elevating mechanism, and the swing mechanism or the elevating mechanism drives the support member to fall or to be retracted, so that the mopping module is lifted or falls.

In an embodiment, further comprising a radar sensor and/or an optical sensor, wherein when the support member falls or is retracted, a height of the radar sensor and/or the optical sensor is substantially unchanged.

In an embodiment, further comprising a detection device, wherein the control device controls, according to a detection result of the detection device, the lifting mechanism to adjust a position of the mopping module relative to the working surface.

In an embodiment, wherein the detection device comprises an environment detection sensor and/or a self-state detection sensor.

In an embodiment, the environment detection sensor is an obstacle detection sensor, and when the environment detection sensor detects an obstacle, the control device controls the lifting mechanism to cause the mopping module to be in the second position; and after the cleaning robot crosses the obstacle, the control device controls the lifting mechanism to cause the mopping module to be in the first position.

In an embodiment, the obstacle detection sensor includes a visual sensor or an infrared sensor or a laser sensor or an ultrasonic sensor.

In an embodiment, the environment detection sensor is configured to detect a ground state, and when the environment detection sensor detects that the ground state is a carpet, the control device controls the lifting mechanism to cause the mopping module to be in the second position; and when the environment detection sensor detects that the ground state is a floor, the control device controls the lifting mechanism to cause the mopping module to be in the first position.

In an embodiment, the environment detection sensor is a visual sensor or a radar sensor, and the control device determines the ground state according to a ground image obtained by the visual sensor or determines the ground state according to a ground material type detected by the radar sensor.

In an embodiment, wherein when the environment detection sensor detects that the cleaning robot reaches a base station, the control device controls the lifting mechanism to lift the mopping module to the second position.

In an embodiment, the mopping module is detachably mounted on the body, and when the detection device detects that the cleaning robot reaches a position of unloading a wiping member, the control device controls the mopping module to be separated from the body at least in the second position.

In an embodiment, when the environment detection sensor detects that the cleaning robot reaches a position of loading the wiping member, the control device controls the lifting mechanism to drive the mopping module to move to the first position or a fourth position.

In an embodiment, the fourth position is higher than or equal to the first position and lower than the second position.

In an embodiment, wherein the environment detection sensor is a ranging sensor or a positioning sensor.

In an embodiment, the ranging sensor is an infrared sensor or a laser sensor or an ultrasonic sensor.

In an embodiment, wherein the positioning sensor is a magnetic detection sensor.

In an embodiment, the magnetic detection sensor is a Hall effect sensor or a reed effect sensor.

In an embodiment, wherein the self-state detection sensor is configured to detect a degree of staining or a degree of damage of the mopping module; and when the degree of staining or the degree of damage of the mopping module reaches a preset value, a mopping module replacement program is started, and in the mopping module replacement program, the control device controls the lifting mechanism to cause the mopping module to be in the second position.

In an embodiment, wherein the self-state detection sensor is a capacitive sensor or a resistive sensor or a visual sensor.

In an embodiment, wherein the self-state detection sensor is configured to detect a cleaning time or a cleaning area of the cleaning robot; and when the cleaning time or the cleaning area reaches a preset value, a mopping module replacement program is started, and in the mopping module replacement program, the control device controls the lifting mechanism to cause the mopping module to be in the second position.

In an embodiment, wherein the self-state detection sensor is further configured to detect a cleaning frequency of the cleaning robot, and the preset value is increased or decreased according to the cleaning frequency.

In an embodiment, wherein the self-state detection sensor is configured to detect a cleaning frequency of the cleaning robot; and when the cleaning frequency reaches a preset value, a mopping module replacement program is started, and in the mopping module replacement program, the control device controls the lifting mechanism to cause the mopping module to be in the second position.

In an embodiment, wherein the self-state detection sensor is a signal receiver, configured to receive a cleaning frequency or a cleaning time or a cleaning area of the cleaning robot sent by a user terminal.

In an embodiment, wherein the self-state detection sensor is a timer or a counter or an odometer.

In an embodiment, wherein in the mopping module replacement program, the control device controls the cleaning robot to return to a base station.

In an embodiment, the detection device is configured to detect a battery level, and when the battery level is lower than a preset value, the control device controls the cleaning robot to start returning to a base station, and meanwhile, the control device controls the lifting mechanism to cause the mopping module to be in the second position.

In an embodiment, when the self-state detection sensor detects that the cleaning robot is trapped or stuck, the control device controls the lifting mechanism to cause the mopping module to be in the second position.

In an embodiment, the self-state detection sensor is a collision sensor, and when a detected collision frequency is greater than a preset value, the control device determines that the cleaning robot is trapped or stuck.

In an embodiment, the self-state detection sensor is a speed sensor or an acceleration sensor, and when a detected speed or acceleration is continuously not in a preset value range, the control device determines that the cleaning robot is trapped or stuck.

In an embodiment, the speed sensor is a wheel speed sensor.

In an embodiment, the self-state detection sensor is a positioning sensor, configured to obtain a current position of the cleaning robot, and when the current position remains unchanged within a preset time, the control device determines that the cleaning robot is trapped or stuck.

In an embodiment, the positioning sensor is a laser distance sensor or a visual sensor.

In an embodiment, the self-state detection sensor is a tilt sensor, the control device determines, according to a detection result of the tilt sensor and a magnitude of a preset value, that the cleaning robot tilts upward or downward, and when the control device determines that the cleaning robot tilts upward, the control device controls the lifting mechanism to lift the mopping module to the second position; and when the control device determines that the cleaning robot tilts downward, the control device controls the lifting mechanism to lower the mopping module to the first position.

A control method for a cleaning robot is provided, where the cleaning robot includes: a body; a moving device, configured to support the body and drive the cleaning robot to move; a cleaning device, configured to be mounted on the body and perform cleaning work on a working surface; a control device, configured to control the moving device to drive the cleaning robot to move; and a power device, configured to supply power to the moving device; and the control method includes the following steps: starting the cleaning robot to enter a working state, and controlling the cleaning device to be in a first position relative to the working surface; and determining whether the cleaning device needs to be lifted, and if the cleaning device needs to be lifted, controlling the cleaning device to be lifted from the first position relative to the working surface to a second position, and meanwhile, providing a support point that is relative to the working surface and different from the moving device.

In an embodiment, the cleaning device includes a mopping module.

In an embodiment, when an obstacle is detected, it is determined that the mopping module needs to be lifted, and the mopping module is controlled to be lifted to the second position; and after the cleaning robot crosses the obstacle, the mopping module is controlled to return to the first position.

In an embodiment, when it is detected that a degree of staining or a degree of damage of the mopping module reaches a preset value, a mopping module replacement program is started; and in the mopping module replacement program, it is determined that the mopping module needs to be lifted, and the mopping module is controlled to be lifted to the second position.

In an embodiment, when it is detected that a cleaning time or a cleaning area of the cleaning robot reaches a preset value, a mopping module replacement program is started; and in the mopping module replacement program, it is determined that the mopping module needs to be lifted, and the mopping module is controlled to be lifted to the second position.

In an embodiment, when it is detected that a cleaning frequency of the cleaning robot reaches a preset value, a mopping module replacement program is started; and in the mopping module replacement program, it is determined that the mopping module needs to be lifted, and the mopping module is controlled to be lifted to the second position.

In an embodiment, when a carpet is detected, it is determined that the mopping module needs to be lifted, and the mopping module is controlled to be lifted to the second position; and when a floor is detected, the mopping module is controlled to return to the first position.

In an embodiment, when a detected battery level is lower than a preset value, a base station returning program is started; and in the base station returning program, it is determined that the mopping module needs to be lifted, and the mopping module is controlled to be lifted to the second position.

In an embodiment, when it is detected that the cleaning robot is trapped or stuck, it is determined that the mopping module needs to be lifted, and the mopping module is controlled to be lifted to the second position.

In an embodiment, when a detected collision frequency is greater than a preset value, it is determined that the cleaning robot is trapped or stuck.

In an embodiment, when a detected speed or acceleration is continuously not in a preset value range, it is determined that the cleaning robot is trapped or stuck.

In an embodiment, when it is detected that a current position of the cleaning robot remains unchanged within a preset time, it is determined that the cleaning robot is trapped or stuck.

In an embodiment, when it is determined that the cleaning robot tilts upward, it is determined that the mopping module needs to be lifted, and the mopping module is controlled to be lifted to the second position; and when it is determined that the cleaning robot tilts downward, the mopping module is controlled to be lowered to the first position.

In an embodiment, when it is detected that the cleaning robot reaches a base station, it is determined that the mopping module needs to be lifted, and the mopping module is controlled to be lifted to the second position.

In an embodiment, when it is detected that the cleaning robot reaches a position of unloading the mopping module, the mopping module is controlled to be lifted from the second position relative to the working surface to a third position of unloading the mopping module or the mopping module is controlled to be separated from the body in the second position relative to the working surface.

In an embodiment, an electromagnet matching a magnet on the mopping module is disposed on the body, and when it is detected that the cleaning robot reaches the position of unloading the mopping module, the mopping module is controlled to be separated from the body in the second position by controlling a magnitude or a direction of a current of the electromagnet.

In an embodiment, when it is detected that the cleaning robot reaches a position of loading the mopping module, the mopping module is controlled to move to the first position or a fourth position.

In an embodiment, the fourth position is higher than or equal to the first position and lower than the second position.

In an embodiment, the mopping module is disposed at a front end of the body.

In an embodiment, the support point is located between the mopping module and the moving device.

In an embodiment, the support point is located in front of the mopping module.

A control method for a cleaning robot is provided, where the cleaning robot includes: a body; a moving device, configured to support the body and drive the cleaning robot to move; a cleaning device, configured to be mounted on the body and perform cleaning work on a working surface; a control device, configured to control the moving device to drive the cleaning robot to move; and a power device, configured to supply power to the moving device; the cleaning device includes a mopping module, and the mopping module is detachably mounted on the body; and the control method includes the following steps: starting the cleaning robot to enter a working state, and controlling the mopping module to be in a first position relative to the working surface; and determining whether the mopping module needs to be replaced, and if the mopping module needs to be replaced, controlling the mopping module to be lifted from the first position relative to the working surface to a second position, and meanwhile, providing a support point that is relative to the working surface and different from the moving device.

In an embodiment, wherein when it is detected that a degree of staining or a degree of damage of the mopping module reaches a preset value, it is determined that the mopping module needs to be replaced; and a mopping module replacement program is started, and in the mopping module replacement program, the mopping module is controlled to be lifted to the second position.

In an embodiment, wherein when it is detected that a cleaning time or a cleaning area of the cleaning robot reaches a preset value, it is determined that the mopping module needs to be replaced; and a mopping module replacement program is started, and in the mopping module replacement program, the mopping module is controlled to be lifted to the second position.

In an embodiment, wherein when it is detected that a cleaning frequency of the cleaning robot reaches a preset value, it is determined that the mopping module needs to be replaced; and a mopping module replacement program is started, and in the mopping module replacement program, the mopping module is controlled to be lifted to the second position.

In an embodiment, wherein when it is detected that a battery level is lower than a preset value, it is determined that the mopping module needs to be replaced; and a mopping module replacement program is started, and in the mopping module replacement program, the mopping module is controlled to be lifted to the second position.

In an embodiment, wherein when it is detected that the cleaning robot reaches a position of unloading the mopping module, the mopping module is controlled to be separated from the body.

A ground treatment system, comprising a base station and a cleaning robot, wherein the cleaning robot comprises: a body; a moving device, configured to support the body and drive the cleaning robot to move; a control device, configured to control the moving device to drive the cleaning robot to move; and a power device, configured to supply power to the moving device; the ground treatment system further comprises a mopping module, capable of being mounted on the body and configured to perform mopping work;
the cleaning robot further comprises a lifting device and a detection device, the lifting device comprises a lifting mechanism and a support member, and the control device is capable of controlling the lifting mechanism to lift the mopping module from a first position relative to a working surface to a second position; the support member is configured to provide a support point that is relative to the working surface and that is different from the moving device when the mopping module is lifted; and the detection device is configured to detect whether the mopping module needs to be replaced;
the base station is provided with a mop groove configured to contain the mopping module, and a mopping module replacement device; and
when the detection device detects that the mopping module needs to be replaced, the control device controls the cleaning robot to start a mopping module replacement program, and to return to the base station and replace the mopping module in the base station in the mopping module replacement program; and in the mopping module replacement program, the control device controls the lifting mechanism to lift the mopping module to at least the second position.

In an embodiment, wherein the lifting mechanism comprises a mopping module lifting mechanism, and when the detection device detects that a degree of staining or a degree of damage of the mopping module reaches a preset value, the control device controls the cleaning robot to start the mopping module replacement program and to return to the base station in the mopping module replacement program, and controls the mopping module lifting mechanism to lift the mopping module from the first position relative to the working surface to the second position.

In an embodiment, wherein the lifting mechanism comprises a mopping module lifting mechanism, the mopping module is detachably mounted on the body, and after the cleaning robot reaches a position of unloading the mopping module in the base station, the control device controls the mopping module lifting mechanism to cause the mopping module to be separated from the body in the second position.

In an embodiment, the ground treatment system according to claim 41, wherein the cleaning robot further comprises an unloading device, and the unloading device is disposed on the body; and the mopping module is detachably mounted on the body, and after the cleaning robot reaches a position of unloading the mopping module in the base station, the control device controls the unloading device to cause the mopping module to be separated from the body at least in the second position.

In an embodiment, wherein the control device controls the cleaning robot to continue to move, and after the cleaning robot reaches a position of loading the mopping module in the base station, the control device controls the lifting mechanism to cause the mopping module to be in the first position or a fourth position, the fourth position being higher than or equal to the first position and lower than the second position.

Compared with the prior art, the beneficial effects of the present invention are that the cleaning robot can detect whether the mopping module needs to be replaced during work, and control lifting and falling of the mopping module according to a detection result. The cleaning robot can automatically unload a mop or automatically return to a base station to replace a mop, thereby reducing manual participation and keeping clean and hygienic. In addition, when returning to the base station or a specified place to unload an old mop or load a new mop, the cleaning robot lifts the mop in time, which can effectively avoid secondary contamination or cross contamination, and a cleaning effect is better.

### BRIEF DESCRIPTION OF THE DRAWINGS

To describe the technical solutions in the specific implementations of the present invention more clearly, the following briefly describes the accompanying drawings required for describing the specific implementations. Apparently, the accompanying drawings in the following description show some embodiments of the present invention, and a person of ordinary skill in the art may still derive other drawings from these accompanying drawings without creative efforts.
FIG. 1 is a schematic diagram of a ground treatment system according to an embodiment of the present invention.
FIG. 2 is a schematic diagram of a cleaning robot according to an embodiment of the present invention.
FIG. 3 is a top view of the cleaning robot shown in FIG. 2.
FIG. 4 is a module diagram of a cleaning robot according to an embodiment of the present invention.
FIG. 5 is a schematic diagram when a mopping module of a cleaning robot is in a first position according to an embodiment of the present invention.
FIG. 6 is a schematic diagram when the mopping module of the cleaning robot shown in FIG. 5 is in a second position.
FIG. 7 is a schematic diagram when a mopping module of a cleaning robot is in a first position according to another embodiment of the present invention.
FIG. 8 is a schematic diagram when the mopping module of the cleaning robot shown in FIG. 7 is in a second position.
FIG. 9 is a structural diagram of a mopping module lifting mechanism of a cleaning robot according to an embodiment of the present invention.
FIG. 10 is a structural diagram of a mopping module lifting mechanism of a cleaning robot according to another embodiment of the present invention.
FIG. 11 is a schematic diagram when the mopping module of the cleaning robot shown in FIG. 5 is in a third position.
FIG. 12 is a schematic diagram when the mopping module of the cleaning robot shown in FIG. 5 falls.
FIG. 13 and FIG. 14 are schematic diagrams in which a support member of a cleaning robot is movably connected to a body according to an embodiment of the present invention.
FIG. 15 and FIG. 16 are schematic diagrams in which a support member of a cleaning robot is movably connected to a body according to another embodiment of the present invention.
FIG. 17 is a schematic diagram in which a support member of a cleaning robot is movably connected to a body according to another embodiment of the present invention.
FIG. 18 to FIG. 20 are schematic diagrams in which a support member of a cleaning robot is movably connected to a body according to another embodiment of the present invention.
FIG. 21 is a partial schematic diagram of a cleaning robot according to another embodiment of the present invention.
FIG. 22 is a schematic diagram in which a cleaning robot works normally according to another embodiment of the present invention.
FIG. 23 is a schematic diagram in which the cleaning robot of FIG. 22 detects a carpet and lifts a mopping module.
FIG. 24 is a schematic diagram in which the cleaning robot of FIG. 22 moves on a carpet and lifts a mopping module.
FIG. 25 is a schematic diagram in which the cleaning robot of FIG. 22 is in contact with a floor again after passing through the carpet;
FIG. 26 is a schematic diagram in which a cleaning robot works normally according to another embodiment of the present invention.
FIG. 27 is a schematic diagram in which a mopping module of the cleaning robot shown in FIG. 26 is lifted and the cleaning robot crosses an obstacle.
FIG. 28 is a schematic diagram after a mopping module of the cleaning robot shown in FIG. 26 is lifted and the cleaning robot crosses an obstacle.
FIG. 29 is a schematic diagram in which a cleaning robot works normally according to an embodiment of the present invention.
FIG. 30 is a schematic diagram in which a body of the cleaning robot shown in FIG. 29 is lifted and the cleaning robot crosses an obstacle.
FIG. 31 is a schematic diagram after a body of the cleaning robot shown in FIG. 29 crosses an obstacle.
FIG. 32 is a schematic diagram in which a cleaning robot works normally according to another embodiment of the present invention.
FIG. 33 is a schematic diagram in which a mopping module is lifted when the cleaning robot in FIG. 32 crosses an obstacle and a front portion of the body is lifted.
FIG. 34 is a schematic diagram in which a mopping module falls when the cleaning robot in FIG. 32 crosses an obstacle and a tail portion of the body is lifted.
FIG. 35 is a schematic diagram in which the cleaning robot in FIG. 32 is in contact with the ground again after crossing an obstacle.
FIG. 36 is a flowchart of a control method for a cleaning robot according to an embodiment of the present invention.
FIG. 37 to FIG. 39 are schematic diagrams of a process in which a cleaning robot automatically replaces a mop according to an embodiment of the present invention.
FIG. 40 to FIG. 43 are schematic diagrams of a process in which a cleaning robot automatically replaces a mop according to another embodiment of the present invention.
FIG. 44 is a schematic diagram of a cleaning robot according to another embodiment of the present invention.
FIG. 45 is a top view of the cleaning robot shown in FIG. 44.
FIG. 46 is a schematic structural diagram of a mopping module lifting mechanism according to a third embodiment.
FIG. 47 is a schematic structural diagram of a mopping module lifting mechanism according to a fourth embodiment.
FIG. 48 is a schematic structural diagram of a mopping module lifting mechanism according to a fifth embodiment.
FIG. 49 and FIG. 50 are schematic diagrams in which a support member of a cleaning robot is movably connected to a body according to another embodiment of the present invention.
FIG. 51 is a schematic diagram in which a support member of a cleaning robot is movably connected to a body according to another embodiment of the present invention.
FIG. 52 and FIG. 53 are schematic diagrams in which a support member of a cleaning robot is movably connected to a body according to another embodiment of the present invention.
FIG. 54 is a schematic structural diagram in which a mop in a mopping module falls according to the fifth embodiment.
FIG. 55 to FIG. 57 are schematic diagrams of a process in which a mopping module of a cleaning robot falls according to an embodiment of the present invention.
FIG. 58 to FIG. 60 are schematic diagrams of a process in which a mopping module of a cleaning robot falls according to another embodiment of the present invention.
FIG. 61 to FIG. 65 are schematic diagrams of a process in which a cleaning robot detects a ground state and controls lifting and falling of a mopping module according to another embodiment of the present invention.
FIG. 66 to FIG. 69 are schematic diagrams of a process in which a cleaning robot detects a ground state and controls lifting and falling of a mopping module according to another embodiment of the present invention.
FIG. 70 is a schematic diagram of mounting of a mopping module position detection device and a position mark of a cleaning robot according to an embodiment of the present invention.
FIG. 71 is a schematic diagram when a mopping module of a cleaning robot is in a first position according to the fifth embodiment.
FIG. 72 is a schematic diagram when a mopping module of a cleaning robot is in a second position according to the fifth embodiment.
FIG. 73 is a schematic structural diagram in which a mop of a mopping module of a cleaning robot falls according to the fifth embodiment.
FIG. 74 is a schematic structural diagram of a stop device of the cleaning robot in FIG. 71.
FIG. 75 is a flowchart of a control method for a cleaning robot according to another embodiment of the present invention.

Corresponding reference numbers of related components are as follows:

| | | | |
|---|---|---|---|
| 1. | Cleaning robot | 2. | Base station |
| 10. | Detection device | 20. | Fixed plate |
| 30. | Control device | 40. | Moving device |
| 50. | Cleaning device | 11. | Body |
| 12. | Driving wheel | 13. | Support wheel |
| 14. | Mopping module | 15. | Elevating motor |
| 16. | Two-stage gear reduction mechanism | 17. | Pressure spring |
| 18. | Magnetic element | 19. | Elevating frame |
| 21. | Screw rod | 22. | Sliding groove |
| 23. | Chain | 24. | Gear |
| 29. | Support member adjustment mechanism | 31. | Elastic member |
| 33. | Liquid tank | 34. | First position |
| 35. | Carpet | 36. | Second position |
| 37. | Obstacle | 38. | Obstacle detection sensor |
| 39. | Dust-collecting box | 201. | First docking position |
| 202. | Second docking position | 203. | New mop groove |
| 204. | Old mop groove | 205. | Upper plate |
| 206. | Support plate | 207. | Bottom plate |
| 60. | Power supply device | 70. | Power device |

| | | | |
|---|---|---|---|
| 41. | Roller brush | 42. | Side brush |
| 43. | First link mechanism | 44. | Second link mechanism |
| 45. | Third link mechanism | 46. | Fourth link mechanism |
| 47. | Transmission shaft | 48. | Fifth link mechanism |
| 49. | Sixth link mechanism | 51. | First cam mechanism |
| 52. | Second cam mechanism | 53. | First rack |
| 54. | Fixed gear | 55. | Second rack |
| 56. | Seventh link mechanism | 57. | Eighth link mechanism |
| 58. | Elastic member | 26. | Movable support mechanism |
| 59. | Magnet | 60. | Electromagnet |
| 61. | Push-pull electromagnet | 62. | Push rod |
| 63. | Limit device | 64. | First bevel |
| 65. | Second bevel | 66. | Position mark |
| 67. | Magnetic detection device | 68. | Stop device |

### DETAILED DESCRIPTION

The technical solutions in the present invention are clearly and completely described below with reference to the accompanying drawings. Apparently, the described embodiments are merely some of rather than all of the embodiments of the present invention. All other embodiments obtained by a person of ordinary skill in the art based on the embodiments of the present invention without creative efforts shall fall within the protection scope of the present invention.

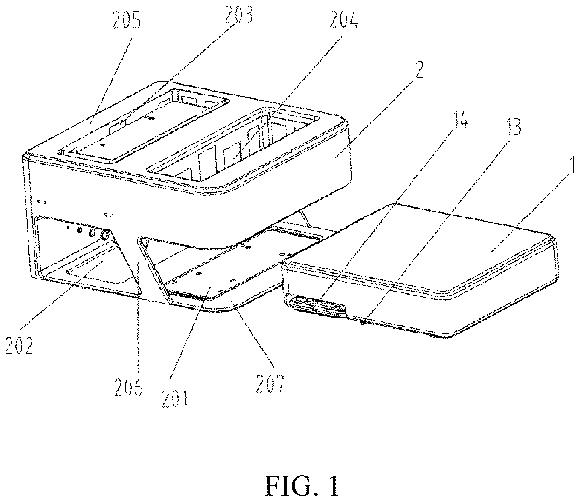

FIG. 1 is a schematic diagram of a ground treatment system according to an embodiment of the present invention, and the ground treatment system includes a base station 2 and a cleaning robot 1. The cleaning robot 1 may be a domestic and/or indoor service robot, for example, a ground cleaning robot. Specifically, the ground cleaning robot may be an automatic mopping machine, or an automatic mopping and sweeping integrated machine, or an automatic sweeper. The cleaning robot 1 works in a working region to complete tasks such as mopping and sweeping. When the cleaning robot 1 needs to return to the base station 2, for example, when it is detected that a cleaning device needs to be replaced or the cleaning robot 1 needs to be charged, a base station returning program is started, and the cleaning robot 1 returns to the base station 2 to complete an automatic replacement action of a wiping member and/or a charging action.

The base station 2 includes a bottom plate 207, a support plate 206, and an upper plate 205, and the upper plate 205 is connected to the bottom plate 207 by the support plate 206. A new mop groove 203, an old mop groove 204, and a mop replacement device (not shown in the figure) are disposed on the upper plate 205, the mop replacement device may adopt an elevating mechanism, a swing mechanism, or the like, and projections of the new mop groove 203 and the old mop groove 204 on the bottom plate 207 correspond to a second docking position 202 and a first docking position 201 of the cleaning robot 1 on the bottom plate 207. It may be understood that positions of the new mop groove 203 and the old mop groove 204 are not fixed. For example, in another embodiment, the positions of the new mop groove 203 and the old mop groove 204 may be alternatively interchangeable. The cleaning robot 1 unloads an old wiping member in the first docking position 201, the mop replacement device of the base station 2 recycles the old wiping member, and the mop replacement device of the base station 2 releases a new wiping member, so that the cleaning robot 1 loads the new wiping member in the second docking position. The wiping member may be a mop, a wet wipe, a cleaning paper, a sponge eraser, or the like. In this embodiment of the present invention, an example in which the wiping member is the mop is used for description. Another type of wiping member is also applicable, and details are not described again.

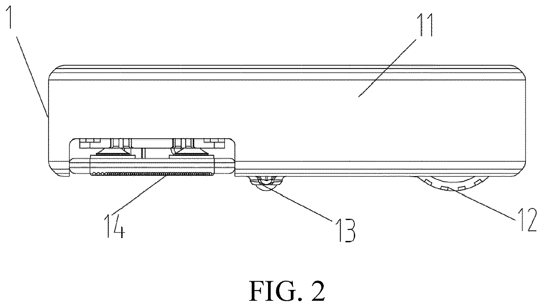

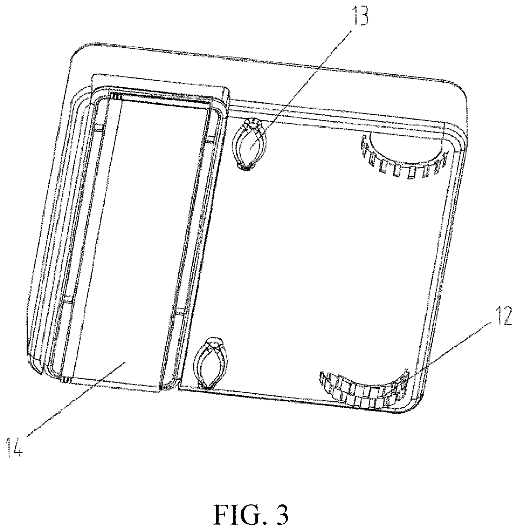

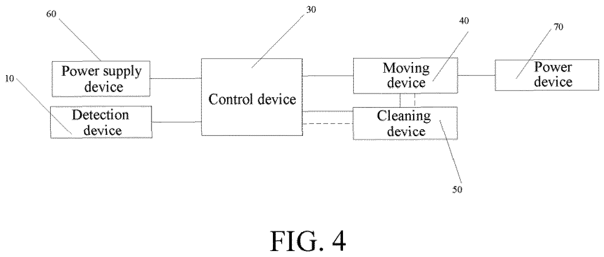

FIG. 2 and FIG. 3 show a cleaning robot according to an embodiment of the present invention. In this embodiment, the cleaning robot 1 is a cleaning robot, and specifically is an automatic mopping machine. With reference to FIG. 4, the cleaning robot 1 includes a body 11, a detection device 10, a control device 30, a moving device 40, a cleaning device 50, a power supply device 60, and a power device 70.

The moving device 40 is configured to support the body 11 and drive the cleaning robot 1 to move, and the moving device is disposed at a rear end of the body 11. In this embodiment, the moving device 40 specifically includes two driving wheels 12 that are located on two sides of the cleaning robot 1 and that may be independently driven by the power device 70. Such a configuration can control a traveling speed and a direction of the moving device 40 by controlling speeds of the two driving wheels and a speed difference, so that moving and steering of the cleaning robot 1 are flexible and accurate. The moving device 40 may be in another form such as a crawler type.

The power device 70 provides power for the cleaning robot 1 to move and work. Specifically, the power device includes a motor located in the cleaning robot 1 and a transmission mechanism connected to the motor and provides power for the moving device 40. The transmission mechanism is connected to the moving device 40, the motor drives the transmission mechanism to work, and a transmission effect of the transmission mechanism enables the moving device 40 to move. The moving device 40 receives an instruction from the control device 30 and drives the cleaning robot 1 to automatically move on a working surface.

The control device 30 is a control center of the cleaning robot 1 and is electrically connected to devices such as the power device 70, the power supply device 60, and the detection device 10, to receive information sent by the devices. The control device 30 controls the power device 70 to drive the moving device 40 to drive the cleaning robot 1 to move, and controls the cleaning robot 1 to perform various actions, tasks, or the like such as switching between working regions, returning to the base station, and charging. The control device 30 may be an embedded digital signal processor (DSP), a microprocessor unit (MPU), an application-specific integrated circuit (ASIC), a programmable logic device (PLD), a system on chip (SOC), a central processing unit (CPU), a field programmable gate array (FPGA), or the like.

The power supply device 60 provides energy for the control device 30, the power device 70, the detection device 10, and the like of the cleaning robot 1 to work. The power supply device 60 is generally a rechargeable battery and provides power for the cleaning robot to run, or may be connected to an external power supply for charging. Preferably, the power supply device 60 has a charging or discharging protection unit, which can protect charging or discharging of the power supply device 60.

The cleaning device 50 is configured to be mounted on the body 11. The cleaning device 50 includes a mopping module 14, and the mopping module 14 includes a mopping plate, on which a mop can be detachably mounted, and is configured to perform mopping work of the cleaning robot 1. In this embodiment, the mopping module 14 is disposed at a front end of the body 11, a mopping area is larger, and a mopping effect is better. Certainly, it may be understood that in another embodiment, the mopping module 14 may be alternatively disposed at an intermediate end or a rear end of the body 11.

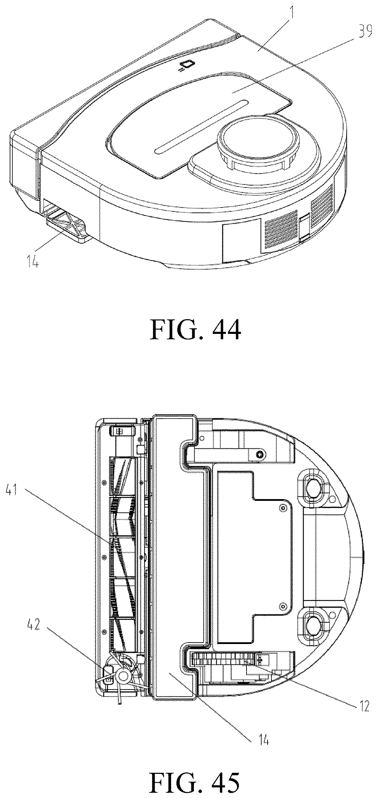

In another embodiment, the cleaning robot 1 is an automatic sweeping and mopping integrated machine and includes a dust-collecting device and a cleaning device. The cleaning device 50 includes a mopping module, a roller brush, and a side brush. In this embodiment, referring to FIG. 44 and FIG. 45, the mopping module 14 is disposed at a front part of the body 11 and located among the roller brush 41 and the side brush 42 and the driving wheel 12. Such an arrangement makes it convenient for the cleaning robot 1 to first sweep the ground and then mop the ground, thereby enhancing a cleaning effect. The roller brush and side brush mechanism adopts a common roller brush and a common side brush in the industry, which are configured to clean sundries such as dust on a ground, a corner, and the like. The dust-collecting device includes components such as a dust-collecting box 39 and a fan. Dust cleared by the roller brush 41, the side brush 42, and the like is collected into the dust-collecting box 39 through suction generated by using the fan.

In this embodiment of the present invention, the cleaning robot 1 further includes a lifting device, configured to lift the cleaning device 50. In an embodiment, the lifting device is configured to lift the mopping module 14. The lifting device includes a lifting mechanism, and the control device 30 can control the lifting mechanism to lift the mopping module 14 from a first position relative to the working surface to a second position. The lifting action from the first position to the second position may be performed in a direction perpendicular to the working surface, or may be performed in a direction at a specific angle to the working surface.

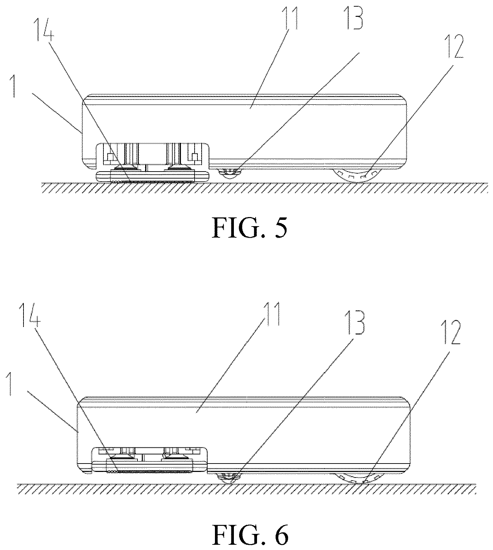

FIG. 5 and FIG. 6 are schematic diagrams when a mopping module is in a first position and in a second position respectively according to an embodiment of the present invention. When in the first position, the mopping module 14 is in close contact with the working surface and performs mopping work in this state. When the mopping module 14 needs to be lifted, the control device 30 controls the lifting mechanism to cause the mopping module 14 to leave the working surface and lift the mopping module from the first position to the second position. In this embodiment, the lifting process is performed in the direction perpendicular to the working surface. In this embodiment, the body 11 of the cleaning robot 1 is not lifted in the process of lifting the mopping module 14, that is, the mopping module 14 is displaced relative to the body 11 of the cleaning robot 1.

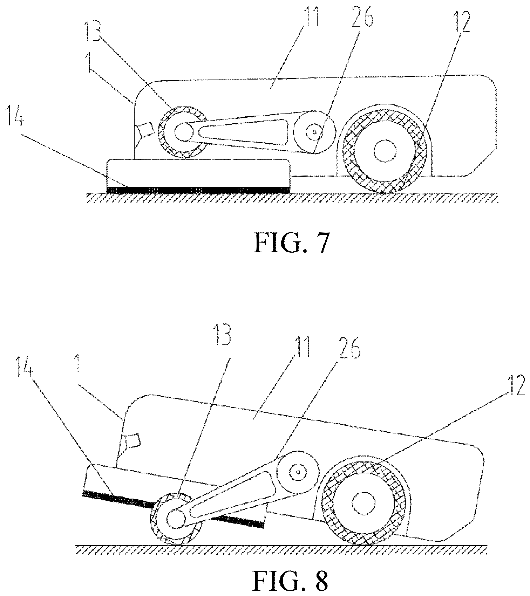

FIG. 7 and FIG. 8 are schematic diagrams when a mopping module is in a first position and in a second position respectively according to another embodiment of the present invention. Similarly, when in the first position, the mopping module 14 is in close contact with the working surface and performs mopping work in this state. When the mopping module 14 needs to be lifted, the control device 30 controls the lifting mechanism to cause the mopping module 14 to leave the working surface and lift the mopping module from the first position to the second position. In this embodiment, the lifting process is performed in the direction at a specific angle to the working surface. In this embodiment, the body 11 of the cleaning robot 1 is lifted in the process of lifting the mopping module 14, and the mopping module is not displaced relative to the body 11 of the cleaning robot 1.

In a working process of the cleaning robot, the control device can determine, according to a detection result of the detection device, whether the mopping module needs to be lifted, and control lifting and falling of the mopping module by using the lifting device. An advantage of this practice is that the cleaning robot still has better passability even when encountering a change in the ground state, for example, when encountering a carpet or an obstacle, and can avoid dirtying the carpet, the obstacle, or the like. In addition, when the cleaning robot returns to the base station or switches between working regions, the control device controls the lifting device to lift the mopping module in time, thereby effectively preventing secondary contamination or cross contamination and achieving a better cleaning effect.

In an embodiment, the lifting device includes a support member, and the support member may provide, when the mopping module 14 is lifted, a support point that is relative to the working surface and different from the moving device 40. As shown in FIG. 5 to FIG. 8, the support member includes a support wheel 13. As shown in FIG. 5 and FIG. 7, when the mopping module of the cleaning robot 1 is in the first position, that is, when the mopping module is in close contact with the working surface and performs mopping work, a driving wheel 12 supports a rear end of the body 11, and the mopping module supports a front end of the body due to being in contact with the working surface. Under the action of the driving wheel 12, the cleaning robot 1 completes the mopping work while moving. However, when the mopping module is lifted, the front end of the body 11 falls under the action of its own weight if there is no action of the support member and is in contact with the working surface. In this case, under the action of the driving wheel 12, the cleaning robot 1 is pushed to continue to move, but the front end of the body 11 is always in contact with the working surface, which hinders the movement of the cleaning robot 1. If the working surface is a floor, the floor is scratched during the movement of the cleaning robot 1; if the working surface is a carpet, the front end of the body of the cleaning robot 1 is in contact with the carpet, and phenomena such as getting stuck and incapable of crossing the carpet occur; and if there is an obstacle such as a step in the working surface, the cleaning robot 1 cannot pass through the obstacle. Therefore, the support member is disposed for the cleaning robot 1, so that when the mopping module 14 is lifted, the support member provides the support point that is relative to the working surface and different from the moving device 40, thereby avoiding the occurrence of the above phenomena, as shown in FIG. 6 and FIG. 8.

As shown in FIG. 5 to FIG. 8, in an embodiment, the support point is located between the mopping module 14 and the driving wheel 12. An advantage of this configuration is that a space available for the mopping module 14 is increased, that is, a relatively large mopping area can be provided, thereby improving the cleaning efficiency of the cleaning robot. Certainly, it may be understood that the support point may be alternatively disposed at the front end of the body 11, for example, the support point is disposed in front of the mopping module 14. In addition, the support member may be fixedly connected to the body 11, or may be movably connected to the body 11. The support member may be always in contact with the working surface to provide the support point. For example, the support member may be in contact with the working surface but in a floating state when the mopping module 14 is not lifted, and the support member is in close contact with the working surface for supporting when the mopping module 14 is lifted. Alternatively, the support member may be in contact with the working surface only when the mopping module 14 is lifted, to provide the support point.

As shown in FIG. 5 and FIG. 6, in an embodiment, the lifting mechanism of the cleaning robot 1 includes a mopping module lifting mechanism (not shown in the figure) capable of driving the mopping module 14 to be lifted from the first position relative to the working surface to the second position. In this embodiment, the mopping module lifting mechanism is an elevating mechanism, and the elevating mechanism may include an elevating motor, a transmission mechanism, and an elevating detection unit. The transmission mechanism is driven by using the elevating motor to drive the mopping module 14 to move upward or downward, and the control device controls, according to a detection result of the elevating detection unit, the mopping module to move upward or downward.

In an embodiment of this application, the elevating detection unit may detect, according to a rotation angle of a motor, or a rotation angle of a transmission shaft, or a position change of the mopping module lifting mechanism, whether the mopping module 14 reaches conditions such as the first position or the second position of the corresponding working surface. When these conditions are reached, the control device controls the elevating motor to pause. For example, when the mopping module is lifted from the first position relative to the working surface to the second position, the elevating detection unit detects whether the rotation angle of the elevating motor reaches a preset threshold. The preset threshold is related to the rotation angle of the elevating motor when the mopping module is in a condition such as the second position of the corresponding working surface. During the movement of the mopping module, when the elevating detection unit detects that the rotation angle of the elevating motor reaches an angle threshold corresponding to the second position, the control device controls the elevating motor to pause working, that is, controls the mopping module to pause lifting. When the elevating detection unit detects that the rotation angle or the rotation radian of the elevating motor or the rotation angle or the rotation radian of the transmission mechanism does not reach the preset threshold, the control device controls the elevating motor to continue to work, that is, controls the mopping module to continue to lift. In an embodiment of this application, the elevating detection unit may be an optical grating, a Hall sensor, an infrared sensor, or another condition. The rotation angle of the motor may be detected by using the optical grating, the rotation angle of the transmission shaft may be detected by using the Hall sensor, the position change of the mopping module lifting mechanism may be detected by using the infrared sensor, or the like. This is not limited in this application.

In another embodiment, the mopping module lifting mechanism may be alternatively a swing mechanism, and the mopping module 14 is driven by using the swing mechanism to be lifted from the first position relative to the working surface to the second position.

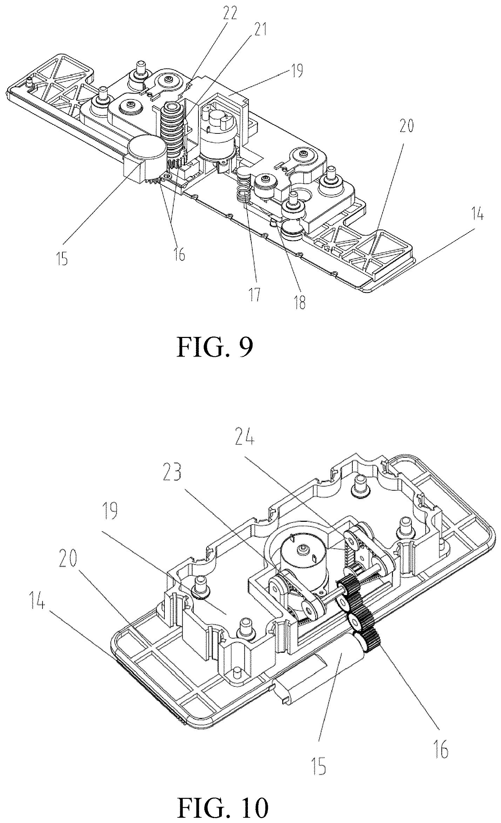

FIG. 9 is a structural diagram of a mopping module lifting mechanism according to this embodiment. In this embodiment, the mopping module lifting mechanism can adjust a distance between the mopping module 14 and the working surface. Specifically, the mopping module lifting mechanism includes an elevating mechanism and a fixed plate 20. The elevating mechanism is fixedly connected to the fixed plate 20 and the mopping module 14 is mounted on the fixed plate 20. The elevating mechanism includes an elevating motor 15 and a transmission mechanism. The transmission mechanism includes a gear 16 and screw rod 17 meshed device and an elevating frame 19, and the elevating motor 15 drives the transmission mechanism to drive the mopping module 14 to move upward or downward. Specifically, the elevating frame 19 drives, under the action of the elevating mechanism, the mopping module 14 to move upward or downward relative to the working surface.

A sliding groove 22 is provided on the elevating frame 19, a corresponding protrusion (not shown in the figure) is disposed on the body 11, and the mopping module 14 moves upward or downward relative to the body 11 through engagement between the sliding groove 22 and the protrusion. Certainly, it may be understood that the mopping module 14 may alternatively move upward or downward relative to the body 11 through engagement between internal and external threads disposed on the elevating frame and the body. In another embodiment, the mopping module lifting mechanism may be alternatively a swing mechanism. The elevating frame 19 drives, under the action of the swing mechanism, the mopping module 14 to swing, to adjust a distance between the mopping module 14 and the working surface. In this case, a moving path of the mopping module 14 is in an arc shape. A specific structure is a common structure of an adjusting device, which is not described herein again.

FIG. 10 is a structural diagram of a mopping module lifting mechanism according to another embodiment. The mopping module lifting mechanism includes an elevating mechanism and a fixed plate 20. The elevating mechanism is fixedly connected to the fixed plate 20 and a mopping module 14 is mounted on the fixed plate 20. Specifically, the elevating mechanism includes an elevating motor 15 and a transmission mechanism, and the elevating motor 15 drives the transmission mechanism to drive the mopping module 14 to move upward or downward. In this embodiment, the transmission mechanism includes belt transmission devices and an elevating frame 19. Specifically, a motor shaft of the elevating motor 15 is connected to a two-stage gear reduction mechanism 16, each of two ends of an output shaft of the reduction mechanism 16 is connected to a belt transmission device formed by three gears 24 and a chain 23, and the belt transmission devices are fixedly connected to the elevating frame 19, to drive the mopping module 14 to move in a transmission process. It may be understood that a transmission mechanism formed by engagement between gear and rack devices may be alternatively adopted.

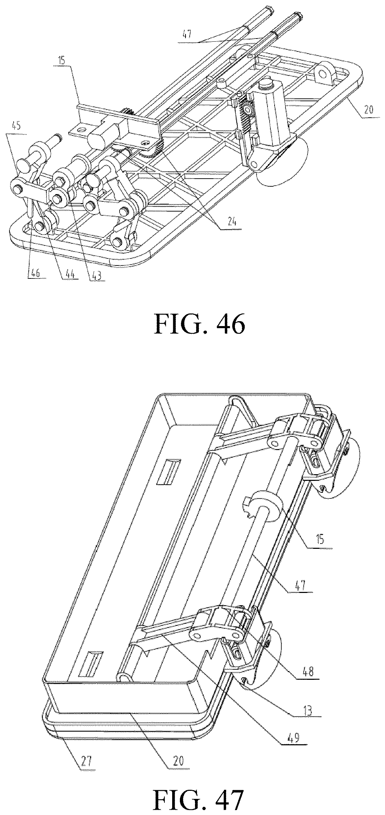

FIG. 46 is a schematic structural diagram of a mopping module lifting mechanism according to a third embodiment. The mopping module lifting mechanism may include an elevating mechanism and a fixed plate 20, the elevating mechanism may include an elevating motor 15 and a transmission mechanism, and the elevating motor 15 drives the transmission mechanism to drive the mopping module to move upward or downward. In this embodiment, the transmission mechanism may include a gear and transmission shaft interference device and first linkage mechanisms each formed by a four-stage link, and the two first linkage mechanisms are rotatably connected to the fixed plate 20 by pin shafts. Specifically, the motor shaft of the elevating motor 15 is respectively connected to two gear 24 and transmission shaft 47 interference devices, the first linkage mechanisms are driven respectively by the two transmission shafts 47, and each first linkage mechanism may include a first link mechanism 43 of which one end is fixedly connected to the elevating motor 15, a second link mechanism 44 of which one end is linked to the other end of the first link mechanism 43, a third link mechanism 45 of which one end is rotatably connected to the body and the other end is linked to the other end of the second link mechanism 44, and a fourth link mechanism 46 of which one end is linked to the other end of the third link mechanism 45 and the other end is linked to the fixed plate 20. The elevating motor drives each first linkage mechanism to drive the fixed plate 20 to move upward or downward, to drive the mopping module to move in a transmission process of the mopping module lifting mechanism.

FIG. 47 is a schematic structural diagram of a mopping module lifting mechanism according to a fourth embodiment. The mopping module lifting mechanism may include an elevating mechanism and a fixed plate 20, the elevating mechanism may include an elevating motor 15 and a transmission mechanism, and the elevating motor 15 drives the transmission mechanism to drive the mopping module to move upward or downward. In this embodiment, the transmission mechanism may include a gear and transmission shaft interference device and second linkage mechanisms each formed by a two-stage link, and the two second linkage mechanisms are rotatably connected to the fixed plate 20 by pin shafts fixed on the body. Specifically, the motor shaft of the elevating motor 15 is connected to one gear and transmission shaft 47 interference device, each of two ends of the transmission shaft 47 is connected to the second linkage mechanism formed by the two-stage link, and each second linkage mechanism may include a fifth link mechanism 48 fixedly connected to the transmission shaft 47, where one end of the fifth link mechanism 48 is linked to one end of a sixth link mechanism 49, and the other end of the sixth link mechanism 49 is linked to the fixed plate 20. The elevating motor 15 drives each second linkage mechanism to drive the fixed plate 20 to move upward or downward, to drive the mopping module to move in a transmission process of the mopping module lifting mechanism.

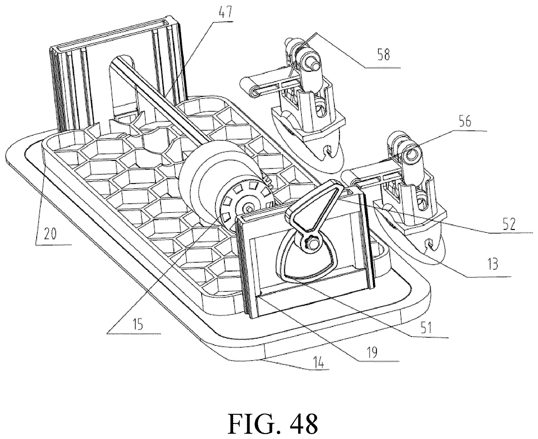

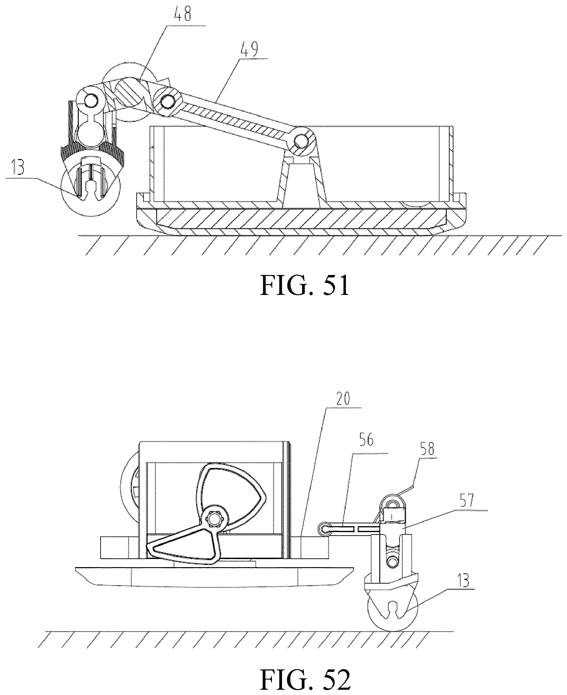

FIG. 48 is a schematic structural diagram of a mopping module lifting mechanism according to a fifth embodiment. The mopping module lifting mechanism may include an elevating mechanism and a fixed plate 20, the elevating mechanism may include an elevating motor 15 and a transmission mechanism, and the elevating motor 15 drives the transmission mechanism to drive the mopping module to move upward or downward. In this embodiment, the transmission mechanism may include a gear and transmission shaft interference device and first cam mechanism 51 and elevating frame 19 combined devices. The elevating frame 19 is fixedly connected to the fixed plate 20, the first cam mechanism 51 is mounted in the elevating frame 19, and the mopping module 14 is mounted on the elevating frame 19. Specifically, the motor shaft of the elevating motor 15 is connected to one gear and transmission shaft 47 interference device, two ends of the transmission shaft 47 are respectively connected to the first cam mechanism 51 and elevating frame 19 combined devices, and the first cam mechanism 51 rotates around the transmission shaft 47 as a center point, to drive the elevating frame 19 to move upward or downward and control lifting and falling of the fixed plate 20, thereby implementing lifting and falling of the mopping module 14 relative to the working surface. FIG. 52 is a schematic structural diagram when a mopping module is lifted. When the first cam mechanism 51 rotates upward to be in contact with an upper side of the elevating frame 19, the mopping module is in a lifted state in the second position. The first cam mechanism 51 may be a complete circle or the first cam mechanism may be another condition such as a semicircle or a 30-degree circle, provided that there is a distance difference between a rotation center point of the first cam mechanism and an edge of the first cam mechanism. The first cam mechanism may rotate around a point other than the center of circle of the first cam mechanism as a center point, to ensure that the fixed plate has a plurality of height conditions during work of the elevating mechanism, thereby implementing lifting and falling of the mopping module relative to the working surface. It may be understood that there may be alternatively no elevating frame, the edge of the first cam mechanism is partially connected to the mopping module, the elevating motor drives the first cam mechanism to rotate, and the first cam mechanism drives the mopping module to move upward or downward.

It should be noted that the connection mentioned in this application may be a direct connection or may be an indirect connection. The mopping module may move upward or downward under the action of the elevating motor to adjust a position, or a position of the mopping module may be adjusted through right-and-left swing or back-and-forth swing of a swing motor.

In this embodiment, the mopping module 14 is detachably mounted on the body 11. More specifically, the control device 30 can control the mopping module 14 to be automatically separated from the body 11, and the mopping module 14 is separated from the body 11 at least in the second position relative to the working surface. An advantage of this practice is that on the one hand, the replacement of a mopping component is more intelligent, convenient, and is clean and hygienic without manual intervention; on the other hand, to facilitate the recycling of a dirty mop, the cleaning robot generally needs to unload the mop at a designated place (for example, the base station), and when the mopping module needs to be replaced, it is mostly because the mop is already very dirty, and the mop is lifted in time to avoid dirtying the ground and causing secondary contamination. When the cleaning robot returns to the designated place, the control device controls the mopping component to unload the mop in the lifted position, or certainly the mop may be unloaded at a place higher than or lower than the position. A case that the mopping module may be automatically separated from the body is described below in detail.

With reference to FIG. 9, the mopping module 14 is mounted on the fixed plate 20 through magnetic attraction. Specifically, a magnetic element such as a magnet or a magnetic strip is disposed on the mopping module 14, and is attracted to a magnetic element 18 disposed on the fixed plate 20. Alternatively, a pin hole may be provided on the mopping module 14 and engaged with a corresponding pin column disposed on the fixed plate 20, to mount the mopping module 14 on the fixed plate 20. A protrusion device (not shown in the figure) such as a top column or a convex ball is downwards disposed on the body 11, and the protrusion device moves relative to the mopping module 14 and is in contact with the mopping module 14, so that the mopping module 14 is separated from the body 11. There are two protrusion devices, and projections of the protrusion devices on the mopping plate fall on two ends of the mopping plate. Certainly, there may be alternatively one or more than two protrusion devices.

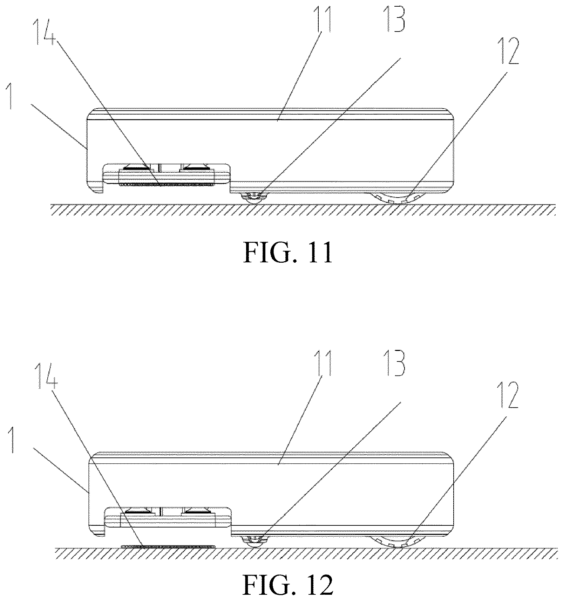

In an embodiment, the mopping module 14 further includes a third position relative to the working surface. FIG. 11 is a schematic diagram when a mopping module of a cleaning robot is in a third position according to the present invention. Specifically, the mopping module 14 is detachably mounted on the body 11, and the mopping module lifting mechanism is further configured to drive the mopping module 14 to be lifted from the second position relative to the working surface to the third position of unloading the mopping module 14. When the mopping module 14 is lifted to the third position, the protrusion device is in contact with the mopping module 14, to provide a downward action force to the mopping module 14, so that the mopping module 14 is separated from the body 11 (as shown in FIG. 12).

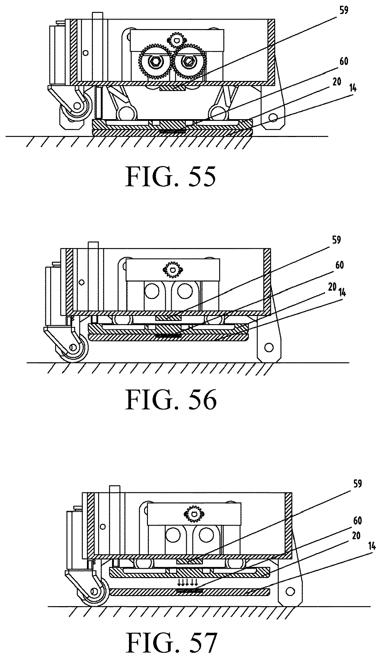

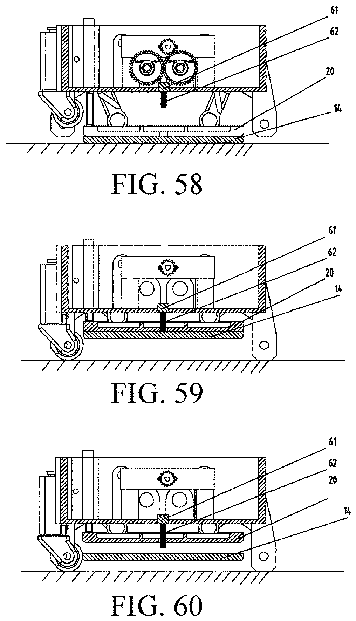

In another embodiment, the cleaning robot 1 further includes an unloading device, the unloading device is disposed on the body 11, and the control device 30 can control the unloading device to cause the mopping module 14 to be separated from the body 11 at least in the second position. For example, the mopping module 14 may be unloaded in the third position relative to the working surface, or certainly the mopping module 14 may be unloaded in the second position rather than in the third position. In this case, the unloading device is a protrusion device. The protrusion device includes an elevating mechanism, and the control device 30 controls the elevating mechanism to drive the protrusion device to move toward the mopping module 14 and to be in contact with the mopping module 14, to provide a downward action force to the mopping module 14, so that the mopping module 14 is separated from the body 11. In still another embodiment, the unloading device includes an electromagnet, matching a magnet on the mopping module, and the control device controls attraction or separation between the mopping module and the body by controlling a magnitude or a direction of a current passing through the electromagnet. Specifically, the electromagnet is disposed on the body 11, the magnet is disposed on the mopping module 14, and the control device 30 controls the attraction or the separation between the mopping module 14 and the body 11 by controlling the magnitude or the direction of the current passing through the electromagnet. For example, when the control device 30 controls the direction of the current passing through the electromagnet to be a positive direction, the mopping module 14 is attracted to the body 11. When the mopping module 14 needs to be separated from the body 11, the control device 30 controls the direction of the current passing through the electromagnet to be a negative direction. Alternatively, the attraction or the separation between the mopping module 14 and the body 11 may be controlled by controlling presence or absence of the current passing through the electromagnet; and when there is a current passing through the electromagnet, the mopping module 14 is attracted to the body 11, and when no current passes through the electromagnet, the mopping module 14 is separated from the body 11. In another embodiment, as shown in FIG. 55 to FIG. 57, an electromagnet 59 is disposed on the body 11, and a magnet 60 is disposed on the mopping module 14 and is attracted to the magnetic element 18 on the fixed plate 20. A quantity of magnets may be two, four, or six, or certainly may be another value. This is not limited herein. When the mopping module 14 works normally, no current passes through the electromagnet 59, and the mopping module 14 is in close contact with the ground (as shown in FIG. 55). When the mopping module 14 needs to be unloaded, the mopping module lifting mechanism drives the mopping module 14 to be lifted to an unloaded position (as shown in FIG. 56), and meanwhile, the control device 30 controls a magnitude of a current passing through the electromagnet 59 to generate a repulsive force, to overcome attraction between the mopping module 14 and the fixed plate 20, so that the mopping module 14 is separated from the fixed plate 20, that is, separated from the body 11, and the mopping module 14 falls (as shown in FIG. 57). Certainly, the mopping module may be alternatively separated from the body in another position such as the first position or the second position, and the principle is the same as the above. Compared with the foregoing embodiments, an advantage of this embodiment is that there is no need to always electrify the electromagnet when the mopping module 14 works. The electromagnet needs to be electrified only when the mopping module 14 is lifted to the unloaded position, to cause the mopping module to fall, thereby saving energy and avoiding an interference caused when the electromagnet is always electrified. In still another embodiment, the unloading device includes a push-pull electromagnet and a push rod engaged with an iron core of the push-pull electromagnet, and the control device controls, by electrifying the push-pull electromagnet, the push rod to act on the mopping module, so that the mopping module is separated from the body at least in the second position. As shown in FIG. 58 to FIG. 60, a push-pull electromagnet 61 and a push rod 62 engaged with an iron core of the push-pull electromagnet are used. When the mopping module 14 works normally, no current passes through the push-pull electromagnet 61, and the mopping module 14 is in close contact with the ground (as shown in FIG. 58). When the mopping module 14 needs to be unloaded, the mopping module lifting mechanism drives the mopping module 14 to be lifted to the unloaded position (as shown in FIG. 56), and meanwhile, the control device 30 controls the push-pull electromagnet 61 to start, and the push rod extends out instantaneously and is in contact with the mopping module 14 to provide a downward action force to the mopping module (as shown in FIG. 57), to overcome attraction between the mopping module 14 and the fixed plate 20, so that the mopping module 14 is separated from the fixed plate 20, and the mopping module 14 falls (as shown in FIG. 58). An advantage of this embodiment is that there is no need to always electrify the push-pull electromagnet when the mopping module 14 works. The push-pull electromagnet needs to be electrified only when the mopping module 14 is lifted to the unloaded position, and the push rod extends out, to cause the mopping module to fall. The push rod directly acts on the mopping module to separate the mopping module from the body, and there is no need to electrify the push-pull electromagnet by using a relatively large current, thereby saving energy and achieving a more reliable effect. In still another embodiment, the unloading device includes a cam device, and the cam device includes a cam mechanism and a driving motor. The control device 30 controls the driving motor to drive the cam mechanism to rotate, and when being in contact with the mopping module 14, the cam mechanism can apply a downward action force to the mopping module 14, so that the mopping module 14 is separated from the body 11 at least in the second position. In still another embodiment, the unloading device includes a rod device, and the rod device includes a rod mechanism and a driving motor. The control device 30 controls the driving motor to drive the rod mechanism to rotate, and when being in contact with the mopping module 14, the rod mechanism can apply a downward action force to the mopping module 14, so that the mopping module 14 is separated from the body 11 at least in the second position.

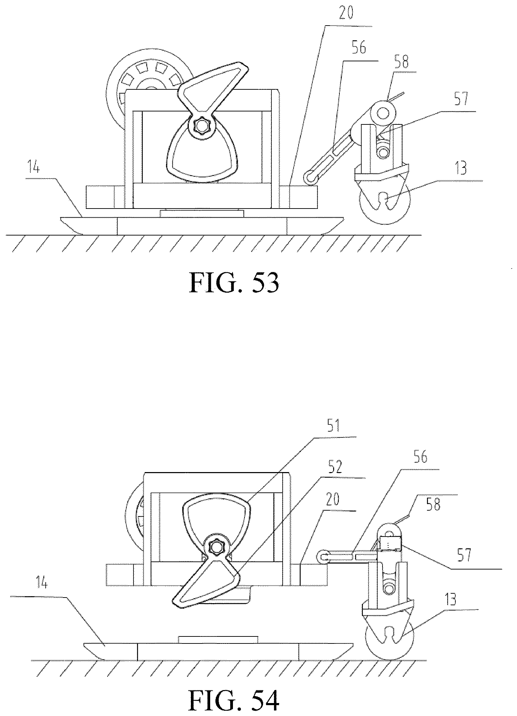

In another embodiment, the mopping module 14 may be further detachably mounted on the body 11 in another manner. FIG. 48 and FIG. 54 are schematic structural diagrams of a mopping module lifting mechanism according to another embodiment. A mop elevating mechanism may further include second cam mechanisms 52. Similar to the first cam mechanisms 51, the second cam mechanisms 52 are also respectively mounted on two ends of the transmission shaft 47 and independent of the first cam mechanisms 51. The second cam mechanism 52 moves synchronously with the first cam mechanism 51, the second cam mechanism 52 and the first cam mechanism 51 should not coincide, and the second cam mechanism 52 can be directly in contact with the mopping module 14 during rotation. The elevating motor 15 drives the second cam mechanism 52 to rotate, and when the second cam mechanism 52 is in contact with the mopping module 14, the mopping module is in the second position, and the second cam mechanism 52 can apply a downward action force to the mopping module 14, so that in a schematic structural diagram of falling of a mop in a mopping module shown in FIG. 54, the mopping module 14 is separated from the body 11. The second cam mechanism 52 may be a complete circle or may be another condition such as a semicircle or a 30-degree circle, and the second cam mechanism rotates around a point other than the center of circle of the cam as a center point. It may be understood that the second cam mechanism may be alternatively replaced with a rod mechanism (not shown in the figure) or the like. This is not limited in this application.

In this embodiment, the cleaning robot 1 further includes a mopping module detection device, configured to detect whether the mopping module 14 is disposed on the body 11 and send a detection signal to the control device 30. The control device 30 determines, based on presence or absence of the detection signal, whether the mopping module 14 is disposed on the body 11, and if the mopping module 14 is not disposed on the body 11, the cleaning robot does not work. In an embodiment, the mopping module detection device includes a magnetic detection sensor such as a Hall sensor, a magnetic element such as a magnet is disposed on a mopping plate of the mopping component 14, and the control device determines, according to a signal detected by the Hall sensor, whether the mopping module 14 is mounted on the body 11. In another embodiment, the mopping module detection device includes a photoelectric sensor, and the control device 30 determines, according to a signal detected by the photoelectric sensor, whether the mopping module 14 is mounted on the body 11. In another embodiment, the mopping module detection device includes a pressure sensor, an optical sensor, an infrared sensor, or the like, which is not limited herein.

When the cleaning robot starts working or restarts working in case of emergency, by detecting whether a mopping component is disposed on the body, a problem that the ground is scratched when the cleaning robot on which no mopping component is mounted works can be prevented. In addition, whether the mopping component is disposed on the body also needs to be detected when the cleaning robot replaces the mopping module. If a detection result is that there is no mopping module on the body when a dirty mop is unloaded, it indicates that the dirty mop is unloaded successfully; and if the detection result is that there is the mopping module on the body when a new mop is mounted, it indicates that the new mop is mounted successfully, to avoid a problem that the new mop is dirtied because the dirty mop is not unloaded but replacement with the new mop is performed, or a problem that the floor is scratched because the cleaning robot works without mounting the new mop.

Still further, to more accurately determine whether the mopping module is successfully replaced, in this embodiment, the cleaning robot 1 further includes a mop type detection device, configured to detect a mop type such as a clean mop or a dirty mop or such as a dry mop or a wet mop, to more accurately determine whether the mopping module 14 is replaced successfully. The mop type detection device includes a mop type sensor such as a capacitive sensor, a resistive sensor, a visual sensor, a humidity sensor, or a weighing sensor, and the control device 30 determines a mop type by comparing a preset value with a value of a detection signal of the mop type sensor. Through detection of the mop type, the cleaning robot may determine whether the mopping module mounted on the body is a clean mopping module or a dirty mopping module or is a dry mop or a wet mop, and may automatically determine whether the mopping module is replaced successfully, to prevent the secondary contamination on the ground caused by continuous work of the cleaning robot in the case of unsuccessful replacement, which brings poor user experience.

To accurately detect a position of the mopping module, better control a position of the mopping module relative to the working surface, and better implement functions of mopping the ground, lifting to cross an obstacle, and replacing a mop.

In this embodiment, the cleaning robot 1 further includes a mopping module position detection device. The mopping module position detection device is disposed on the body 11 and the mopping module position detection device is electrically connected to the control device 30 and is configured to detect a position of the mopping module 14 relative to the working surface and output a detection signal. The control device 30 determines the position of the mopping module 14 relative to the working surface by comparing a preset value with a value of the detection signal. In an embodiment, a position mark is disposed on the mopping module lifting mechanism, and the mopping module position detection device is configured to detect the position mark and output a value of a detection signal. The control device 30 determines the position of the mopping module 14 relative to the working surface by comparing the value of the detection signal with a preset value. Specifically, the mopping module position detection device includes a magnetic detection sensor such as a Hall sensor, and the position mark is a magnetic element such as a magnetic bead or a magnetic steel. When the mopping component 14 is in different positions, magnetic field intensity detected by the magnetic detection sensor is different, and outputted signal values are different. The control device 30 compares each signal value with the preset value to determine whether the mopping module 14 is in a required working position. Certainly, different position marks such as different infrared identifiers may be alternatively disposed in different positions of the mopping module corresponding to the body of the cleaning robot, the mopping module position detection device such as an infrared sensor is disposed on the mopping module lifting mechanism, an infrared identifier is identified by using the infrared sensor, and a detection signal is outputted to the control device 30, to determine whether the mopping module 14 is in a required working position. In another embodiment, the lifting mechanism includes a movable support mechanism 26, and the movable support mechanism 26 connects the support member and the body. The control device 30 controls the movable support mechanism to drive the support member to move to an extended position, so that the mopping module 14 is lifted from the first position relative to the working surface to the second position. The control device 30 controls the movable support mechanism 26 to drive the support member to move to a retracted position, so that the mopping module falls from the second position relative to the working surface to the first position. The mopping module position detection device includes a tilt sensor, configured to detect a degree of inclination of the body 11 and output a detection signal. The control device 30 determines the position of the mopping module 14 relative to the working surface by comparing a value of the detection signal with a preset value.

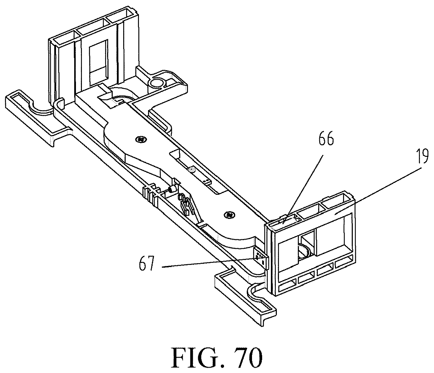

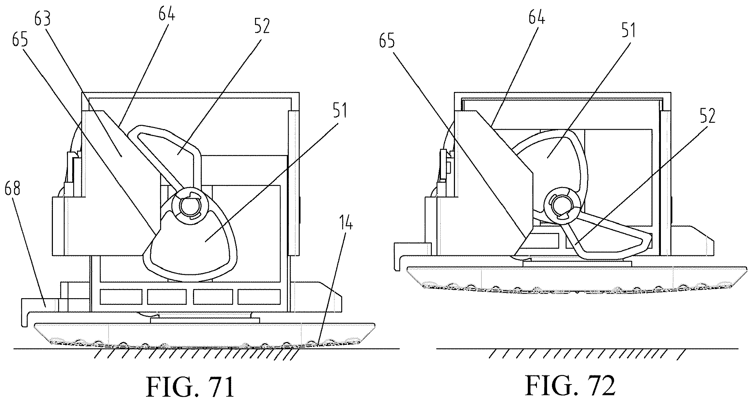

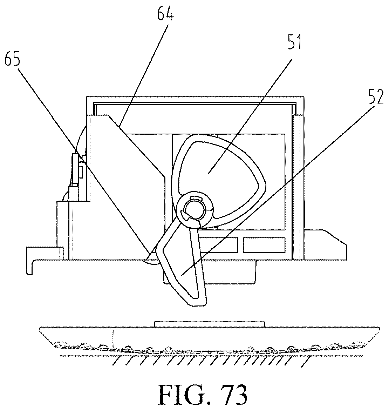

In another embodiment, the control device 30 determines, by comparing a current value of the elevating motor 15 with a preset current value, whether the elevating motor 15 is blocked, and determines a current position of the mopping module 14 by comparing a preset value with a signal value outputted by the position mark that is located on the mopping module lifting mechanism and that is detected by the mopping module position detection device disposed on the body. Mopping module position detection accuracy may be further improved by using this solution. Specifically, as shown in FIG. 70 to FIG. 73, the cleaning robot 1 further includes a limit device 63, and the limit device 63 includes a first bevel 64 and a second bevel 65. When the mopping module 14 is in the first position, a first part edge of the second cam mechanism 52 abuts against the first bevel 64; and when the mopping module 14 is in a separated position, a second part edge of the second cam mechanism 52 abuts against the second bevel 65. As shown in FIG. 70, the cleaning robot 1 further includes a mopping module position detection device 67, and the mopping module position detection device is disposed on the body and includes a magnetic detection sensor such as a Hall sensor. A position mark 66 is disposed on the elevating frame, and the position mark 66 is a magnetic element such as a magnetic bead or a magnetic steel. The elevating motor 15 drives, when rotating, the first cam mechanism 51 and the second cam mechanism 52 to rotate, magnetic field intensity detected by the magnetic detection sensor is different, and outputted signal values are different. When the elevating motor 15 drives, when rotating in a first direction, the first cam mechanism 51 and the second cam mechanism 52 to rotate clockwise, and when the second part edge of the second cam mechanism 52 abuts against the second bevel 65, a current of the elevating motor 15 changes and a current value increases. The control device 30 compares the current value with a preset current value, and determines, when the current value is greater than or equal to the preset current value, that the elevating motor 15 is blocked; and meanwhile, the control device 30 compares a first preset value with a signal value detected by the Hall sensor in this case, and determines, when the signal value reaches the first preset value, that the mopping module 14 is in the separated position, as shown in FIG. 73. In this case, the elevating motor 15 drives, when rotating in a second direction, the first cam mechanism 51 and the second cam mechanism 52 to rotate counterclockwise, and when the first part edge of the second cam mechanism 52 abuts against the first bevel 64, as shown in FIG. 71, the current of the elevating motor 15 similarly changes and a current value increases. The control device 30 compares the current value with the preset current value, and determines, when the current value is greater than or equal to the preset current value, that the elevating motor 15 is blocked; and meanwhile, the control device 30 compares a second preset value with a signal value detected by the Hall sensor in this case, and determines, when the signal value reaches the second preset value, that the mopping component 14 is in the first position. When the elevating motor 15 continues to drive, when rotating in the first direction, the first cam mechanism 51 and the second cam mechanism 52 to rotate clockwise, the control device 30 compares the first preset value with a signal value detected by the Hall sensor in this case, and determines, when the signal value reaches the first preset value, that the mopping module 14 is in the second position; and meanwhile, the control device 30 detects a current value of the elevating motor, and determines, when the current value is less than the preset current value, that the elevating motor 15 is not blocked, as shown in FIG. 72. The first direction is opposite to the second direction. In still another embodiment, a rotational speed of the elevating motor 15 may be alternatively detected, the current position of the mopping module 14 is determined by comparing the rotational speed with a preset value and comparing a preset value with a signal value outputted by the position mark that is located on the mopping module lifting mechanism and that is detected by the mopping module position detection device on the body. In still another embodiment, the current position of the mopping module is determined in the foregoing elevating motor blockage detection manner and by detecting whether the mopping module is mounted on the body and comparing the preset value with the signal value outputted by the position mark that is located on the mopping module lifting mechanism and that is detected by the mopping module position detection device on the body. Specifically, a magnetic sensor such as a Hall sensor is disposed on the elevating frame 19, and a magnetic element such as a magnet is disposed on the mopping plate of the mopping module. The magnetic sensor detects the magnetic element and presence or absence of an outputted signal to determine whether the mopping module is mounted on the elevating frame 19. When it is detected that the elevating motor is blocked and the mopping module is mounted on the body, the control device determines that the mopping module is in the first position in this case. When it is detected that the elevating motor is blocked and the mopping module is not mounted on the body, the control device determines that the mopping module is in the separated position in this case. When the control device 30 compares a signal value detected by the mopping module position detection device in this case with the first preset value and the signal value reaches the first preset value, the control device determines that the mopping module is in the second position in this case. Certainly, the position of the mopping module may be alternatively detected by combining the foregoing manners, and the principle is the same as the above. Details are not described herein again.

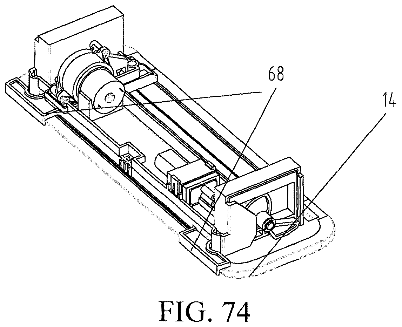

To prevent the mopping module 14 from being stripped from the cleaning robot 1 when encountering an obstacle such as a wire during work, bringing poor user experience to the user, in an embodiment of the present invention, as shown in FIG. 71 and FIG. 74, the cleaning robot 1 further includes a stop device 68, and the stop device 68 is fixedly mounted on an outer side of a front end of a bottom plate of the mopping module lifting mechanism. When the cleaning robot 1 encounters a wire, the wire is first in contact with the stop device 68 and passes through along the bottom of the stop device 68 under the action of the stop device 68, to avoid applying a force to the mopping module 14 to cause the mopping module 14 to be separated from the mop module lifting mechanism.

The mopping module 14 includes a mopping plate and a mop (not shown in the figure), and the mop is detachably mounted on the mopping plate. In an embodiment, rubber thread strips are disposed on the mopping plate at intervals, and the mop is fixed on the mopping plate by using the rubber thread strips. In another embodiment, a pasting strip is disposed on the mopping plate, and the mop is directly pasted on the mopping plate. Certainly, it may be understood that the mop may be alternatively mounted on the mopping plate in a mechanical manner such as snap-fit. According to a requirement of a working scenario, the mop may be a dry mop or a wet mop; and the mop may be a reusable mop or a disposable wet wipe. To increase a pressure between the mopping module and the working surface, so as to have better contact with the working surface and enhance the cleaning effect, in an embodiment, four vertical grooves may be provided in the elevating frame. A pressure spring 17 is disposed in each vertical groove, and when the mopping module 14 works, the pressure spring 17 applies a downward squeeze force to the mopping module 14 under the action of the gravity of the cleaning device.

When the mopping module 14 of the cleaning robot 1 is lifted, the support member is required to cooperatively provide a support point different from the driving wheel. In a corresponding embodiment, the lifting device further includes a support wheel 13 for providing a support point different from the driving wheel 12 for the mopping module 14 when the mopping module is lifted from the first position relative to the working surface to the second position.

The following describes the design of the support member in this embodiment in detail. In this embodiment, the support member is movably connected to the body 11, and a distance between the support member and the top of the body 11 when the mopping module 14 is in the second position is greater than a distance between the support member and the top of the body 11 when the mopping module 14 is in the first position. When the mopping module 14 works normally, the support member is not in contact with the working surface; and only when the mopping module 14 is lifted, the support member is in close contact with the working surface, to provide a support point different from the driving wheel 12.

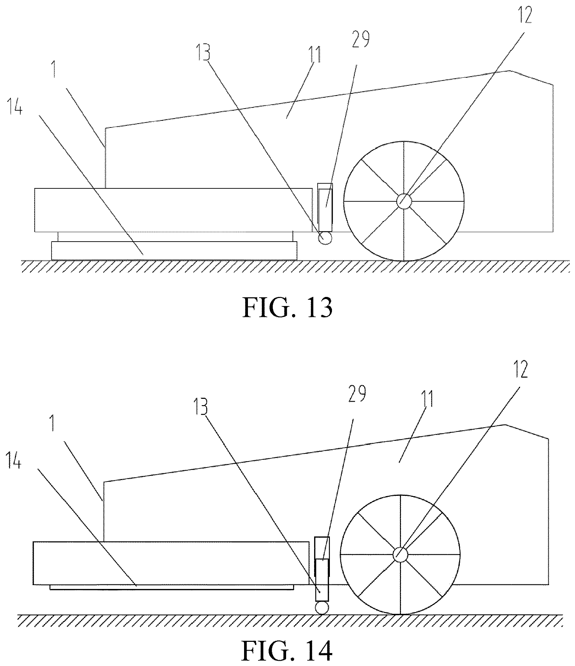

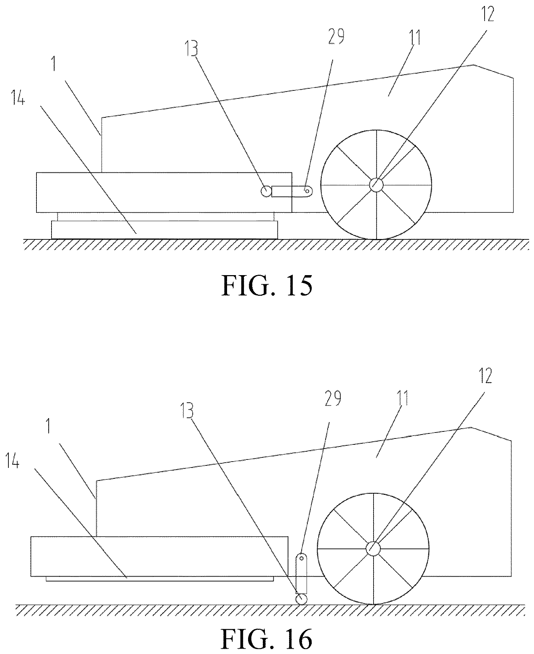

FIG. 13 and FIG. 14 are schematic diagrams in which a support member is movably connected to a body according to an embodiment of the present invention. As shown in FIG. 13, when the mopping module 14 is in contact with the working surface and is in a normal working state, the support wheel 13 is in a retracted state. Specifically, the lifting device of the cleaning robot 1 includes a support member adjustment mechanism 29, and the support member adjustment mechanism 29 drives, when the mopping module 14 falls, the support wheel 13 to be retracted. As shown in FIG. 14, when the mopping module 14 needs to be lifted, the control device 30 controls the mopping module 14 to be lifted. In this case, the support wheel 13 is in a falling state. Specifically, the lifting device of the cleaning robot 1 includes the support member adjustment mechanism 29. The support member adjustment mechanism 29 drives, when the mopping module 14 is lifted, the support wheel 13 to fall, and the support wheel 13 is in contact with the working surface, to provide a support point that is relative to the working surface and different from the driving wheel 12 for the cleaning robot 1. The support member adjustment mechanism 29 includes an elevating mechanism (not shown in the figure), the elevating mechanism includes an elevating motor and a transmission mechanism, and the elevating motor drives the transmission mechanism to drive the support wheel 13 to move upward or downward. Certainly, it may be understood that in another embodiment, as shown in FIG. 15 and FIG. 16, the support member adjustment mechanism 29 includes a swing mechanism (not shown in the figure), and the swing mechanism includes a swing motor. The swing motor drives the transmission mechanism to drive the support wheel 13 to move to a retracted position (as shown in FIG. 15) when the mopping module 14 is in the normal working state and drives the transmission mechanism to drive the support wheel 13 to move to a falling position (as shown in FIG. 16) when the mopping module 14 is lifted.

In an embodiment of this application, the support member adjustment mechanism is linked to the mopping module lifting mechanism. Specifically, the support member adjustment mechanism may be linked in the following manner such as a gear and rack meshed device or a link device.

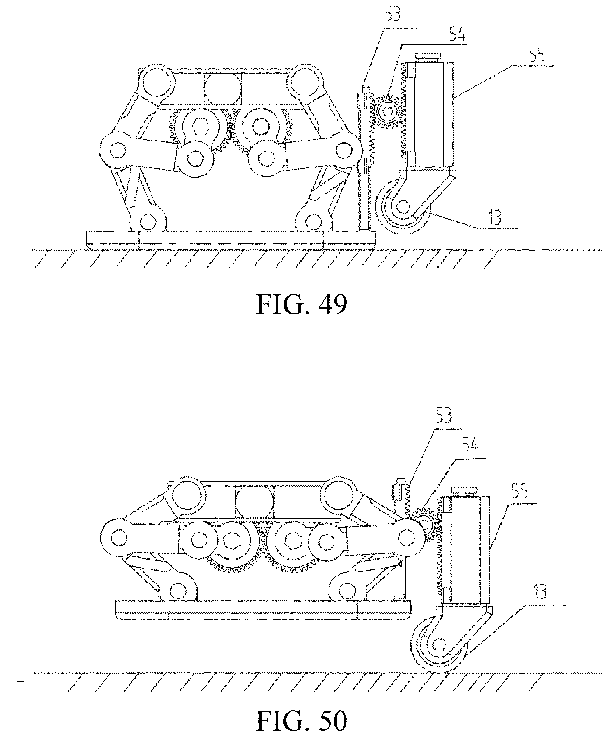

FIG. 49 and FIG. 50 are schematic diagrams in which a support member is movably connected to a body according to another embodiment of the present invention. The schematic diagram shows a linkage manner using a gear and rack meshed device. Specifically, the gear and rack meshed device may include a first rack 53 linked to the mopping module lifting mechanism, a fixed gear 54 meshed with the first rack 53, and a second rack 55 meshed with the fixed gear 54, where the second rack 55 is linked to the support wheel 13. Two sliding grooves are respectively provided on the body, and the first rack 53 and the second rack 55 respectively move upward or downward in the sliding grooves. As shown in FIG. 50, the mopping module lifting mechanism drives, when being lifted, the first rack 53 to rise, the first rack 53 drives, when rising, the fixed gear 54 to rotate, the fixed gear 54 drives, when rotating, the second rack 54 to fall, and the second rack drives, when falling, the support wheel 13 to fall. Conversely, as shown in FIG. 49, the mopping module lifting mechanism drives, when falling, the support wheel 13 to be retracted.

FIG. 51 is a schematic diagram in which a support member is movably connected to a body according to another embodiment of the present invention. The schematic diagram shows a linkage manner using a link device. Specifically, the link device may include a fifth link mechanism 48 fixedly connected to the transmission shaft 47, where one end of the fifth link mechanism 48 is linked to a sixth link mechanism 49, the other end of the fifth link mechanism 48 is linked to the support wheel 13, and a sliding groove is correspondingly provided on the body corresponding to the support wheel 13. The transmission shaft drives the fifth link mechanism 48 to rotate, the fifth link mechanism 48 drives, when the mopping module is lifted, the support wheel 13 to fall, and drives, when the mopping module falls, the support wheel 13 to be retracted.

FIG. 52 and FIG. 53 are schematic diagrams in which a support member is movably connected to a body according to another embodiment of the present invention. The schematic diagram shows another linkage manner using a link device, which may include: a seventh link mechanism 56 and an eighth link mechanism 57. One end of the eighth link mechanism 57 is linked to the support wheel 13, the other end of the eighth link mechanism is linked to one end of the seventh link mechanism 56 by a pin column, the other end of the seventh link mechanism 56 is in contact with the fixed plate 20, a sliding groove is provided on the body corresponding to the eighth link mechanism 57, and the eighth link mechanism 57 can move upward or downward in the sliding groove. When the elevating motor drives the mopping module to rise, the seventh link mechanism 56 drives, through a transmission effect of the pin column, the eighth link mechanism 57 to fall and the support wheel 13 to fall. That is, when the mopping module is in a lifted state, the support wheel provides a supporting effect; and when the fixed plate falls, the link mechanisms drive the support wheel to rise. In another embodiment of this application, an elastic member is optionally sleeved on the pin column. Preferably, the elastic member may be a reset spring, and the reset spring and the pin column are coaxial. One end of the reset spring is in contact with the body, and the other end is in contact with the seventh link mechanism 56. Therefore, when the spring is reset, the seventh link mechanism 56 can effectively follow the mopping module to move downward, so that the support wheel 13 can be effectively controlled to rise. For this embodiment, connection and reset functions of the reset spring may be alternatively replaced with a connecting member such as a pin column. A pin column connected to the fixed plate 20 is disposed at the other end of the seventh link mechanism 56, so that the mopping module is linked to the seventh link mechanism 56. Certainly, in this state, the reset spring may be mounted on the pin column or may not be mounted on the pin column.

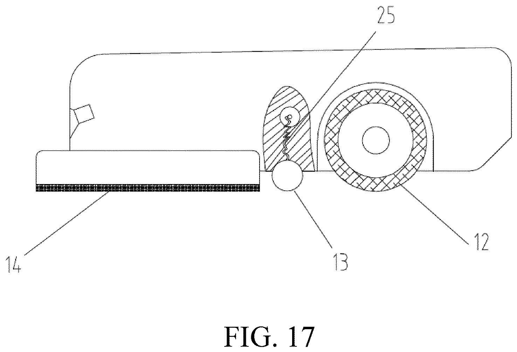

In another embodiment, the support wheel 13 is movably connected to the body 11. The support wheel is in contact with the working surface but in a floating state when the mopping module 14 is not lifted, and the support wheel is in close contact with the working surface for supporting when the mopping module 14 is lifted. FIG. 17 is a schematic diagram in which a support member is movably connected to a body according to an embodiment of the present invention. The support member is in a floating state when the cleaning robot 1 works normally, and supports the body 11 when the mopping module 14 is lifted under the action of the lifting mechanism. Specifically, the lifting device includes an elastic member 31. In this embodiment, the elastic member 31 is a pressure spring, and the pressure spring connects the support wheel 13 and the body. When the cleaning robot works normally, the support wheel 13 is in the floating state under the action of the pressure spring, and when the mopping module 14 is lifted under the driving of the mopping module lifting mechanism, the pressure spring is compressed downward under the action of the gravity of the body, to provide a downward action force to the support wheel 13, that is, the support member supports the body 11 when the mopping module 14 is lifted.

In another embodiment, the support wheel 13 is movably connected to the body 11 and in contact with the working surface only when the mopping module 14 is lifted, to provide a support point. Moreover, while the support wheel 13 provides the support point different from the driving wheel 12, the front end of the body 11 of the cleaning robot 1 is also lifted.

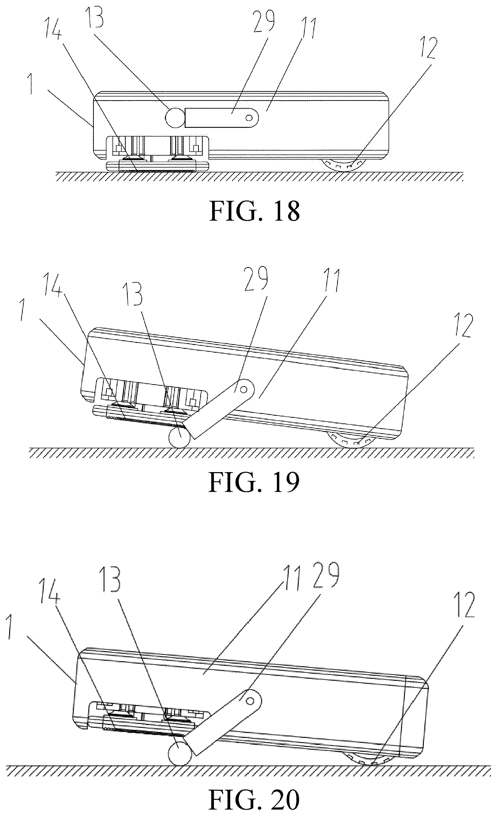

FIG. 18 to FIG. 20 are schematic diagrams in which a support member is movably connected to a body according to another embodiment of the present invention. The lifting device of the cleaning robot 1 includes a support member adjustment mechanism 29, and the support member adjustment mechanism 29 connects the support wheel 13 and the body 11. The control device 30 controls the support member adjustment mechanism 29 to drive the support wheel 13 to be in an extended position, so that the mopping module 14 is lifted from the first position relative to the working surface to the second position. The control device 30 controls the support member adjustment mechanism 29 to drive the support wheel 13 to be in a retracted position, so that the mopping module 14 falls from the second position relative to the working surface to the first position.

As shown in FIG. 18, when the mopping module 14 is in contact with the working surface and is in a normal working state, the support wheel 13 is in a retracted state. Specifically, the support member adjustment mechanism 29 connects the support wheel 13 and the body 11. The control device 30 controls the support member adjustment mechanism 29 to drive the support wheel 13 to be in the retracted position. As shown in FIG. 19, when the mopping module 14 needs to be lifted, the control device 30 controls only the support member adjustment mechanism 29 to drive the support wheel 13 to be in the extended position, so that the mopping module 14 is lifted from the first position relative to the working surface to the second position. In this case, the front end of the body 11 is lifted, and the position of the mopping module 14 relative to the body 11 does not change. It may be understood that alternatively, while the support member adjustment mechanism 29 drives the support wheel 13 to be in the extended position, the mop lifting device is controlled to cause the mopping module 14 to move relative to the body 11. As shown in FIG. 20, when the mopping module 14 needs to be lifted, the control device 30 controls the mopping module lifting mechanism to lift the mopping module 14, and meanwhile, the support member adjustment mechanism 29 drives, when the mopping module 14 is lifted, the support wheel 13 to fall, and the support wheel 13 is in contact with the working surface to provide the support point that is relative to the working surface and different from the driving wheel 12 for the cleaning robot 1. In this case, the front end of the body 11 is lifted, and the position of the mopping module 14 relative to the body 11 changes. The support member adjustment mechanism includes a swing mechanism, and the swing mechanism drives the support wheel 13 to be retracted or to fall; or the support member adjustment mechanism may include an elevating mechanism, and the elevating mechanism drives the support wheel 13 to be retracted or to fall.

In another embodiment, the support wheel 13 is fixedly connected to the body 11, and a distance between the support wheel and the top of the body 11 is constant. The support wheel may be always in contact with the working surface, or may be in contact with the working surface only when the mopping module is lifted to provide a support point different from the driving wheel 12. In an embodiment, the cleaning robot 1 includes a driven wheel. Specifically, the driven wheel is mounted on the body by using a connecting member, and a specific mounting manner is a conventional method, which is not described in detail herein. The driven wheel may be used as a support wheel.

In another embodiment of the present invention, as shown in FIG. 7 and FIG. 8, the lifting mechanism of the cleaning robot 1 includes a movable support mechanism 26, and the movable support mechanism 26 connects the support wheel 13 and the body 11. In this embodiment, the movable support mechanism 26 includes a swing mechanism (not shown in the figure), and the swing mechanism drives the support wheel 13 to fall or to be retracted, so that the mopping module 14 is lifted or falls. In another embodiment, the movable support mechanism 26 includes an elevating mechanism, and the elevating mechanism drives the support wheel 13 to fall or to be retracted, so that the mopping module 14 is lifted or falls. Specifically, the control device 30 controls the movable support mechanism 26 to drive the support wheel 13 to be in the extended position, so that the mopping module 14 is lifted from the first position relative to the working surface to the second position (as shown in FIG. 8). The control device 30 controls the movable support mechanism 26 to drive the support wheel 13 to be in the retracted position, so that the mopping module 14 falls from the second position relative to the working surface to the first position (as shown in FIG. 7).

In an embodiment of this application, when the support member 13 of the cleaning robot falls or is retracted, it can be ensured that the height of the radar sensor and/or the optical sensor located on the cleaning robot remains substantially unchanged. In some working conditions, the cleaning robot needs to always keep the balance of the body. For example, the cleaning robot is provided with a radar sensor and/or an optical sensor and/or a visual sensor such as an infrared sensor, a laser distance sensor (LDS), an optical flow sensor, or another device for navigation and/or obstacle detection. During normal work, when these devices are mounted on the cleaning robot, the balance of the body needs to be always kept. If the body is unbalanced, detection results of these devices are affected, and consequently the normal work of the cleaning robot is affected. By keeping the height of the radar sensor and/or the optical sensor on the cleaning robot substantially unchanged, the accuracy of the detection result of the cleaning robot can be ensured.

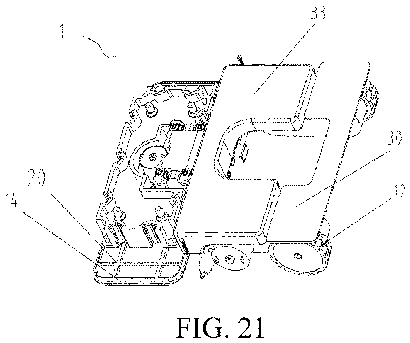

In another embodiment of the present invention, as shown in FIG. 21, the cleaning device further includes a liquid tank 33, the mopping module 14 is disposed on the fixed plate 20, and the liquid tank 33 is disposed between the mopping module lifting mechanism and the control device 30. The control device 30 controls the liquid tank 33 to supply liquid to the mopping module 14 when the cleaning robot 1 works normally and to stop supplying liquid to the mopping module 14 when the mopping module 14 of the cleaning robot 1 is lifted. The control device 30 controls the cleaning device 50 and the moving device 40 to complete a cleaning mode, and the cleaning mode is a mopping mode. When the mopping module 14 does not work, the control device 30 controls the mopping module 14 to be lifted from the first position relative to the working surface to the second position, and the control device 30 controls the liquid tank 33 to stop supplying liquid to the mopping module 14. This has the advantage that a floor or a carpet can be prevented from getting wet when the mopping module of the cleaning robot 1 does not work. In addition, the floor can be prevented from being damaged by always dripping liquid onto the floor when the cleaning robot 1 is stuck for a long time. In an embodiment, the liquid contained in the liquid tank is water. In another embodiment, the liquid contained in the liquid tank is a mixture of water and detergent.

In an embodiment of the present invention, the cleaning robot 1 further includes a detection device 10, and the control device 30 controls, according to a detection result of the detection device 10, the lifting mechanism to adjust the height of the mopping module 14. Specifically, the detection device 10 includes an environment detection sensor and/or a self-state detection sensor. The environment detection sensor of the cleaning robot 1 may be configured to detect a specific scenario in a working environment of the cleaning robot 1, for example, detect an obstacle in the working environment, a ground state in the working environment, or whether the cleaning robot 1 reaches the base station. The self-state detection sensor of the cleaning robot 1 may be configured to detect whether a mop of the cleaning robot 1 needs to be replaced, a battery level of the cleaning robot 1, whether the cleaning robot 1 is trapped or stuck, a degree of inclination of the cleaning robot 1, or the like. This has the advantage that the detection device 10 can monitor in real time a surrounding environmental state encountered when the cleaning robot works and a state of the cleaning robot, and feed back a detection result to the control device 30 in real time, and the control device 30 controls, according to the detection result of the detection device 10, the lifting mechanism in time to adjust the height of the mopping module 14, thereby avoiding a case that the encountered obstacle cannot be crossed and the carpet is dirtied, also avoiding a phenomenon that the cleaning robot is stuck and cannot move when working, and further avoiding contamination caused to the working environment by the failure to lift the mopping module in time. In addition, the cleaning robot can be controlled to start a mop replacement program according to the degree of staining or the degree of damage of the mopping module, lift the mopping module in time, start to return to the base station, and complete recycling and replacement of the mop in the base station.

In an embodiment, the detection device 10 of the cleaning robot 1 includes an environment detection sensor, configured to detect a ground state. When the detection device 10 detects that the ground state is a carpet, the control device 30 controls the lifting mechanism to cause the mopping module 14 to be in the second position; and when the detection device 10 detects that the ground state is a floor, the control device 30 controls the lifting mechanism to cause the mopping module 14 to be in the first position.

Specifically, when detecting that the working surface of the cleaning robot 1 changes from the floor state to the carpet state, the detection device 10 sends a signal to the control device 30, and the control device 30 controls the mopping module lifting mechanism to drive the mopping module 14 to be lifted from the first position 34 relative to the working surface to the second position 36. In this way, the obstruction caused by the carpet to the mopping module 14 is avoided, and stains on the mopping module 14 are prevented from dirtying the carpet. When detecting the floor state again, the detection device 10 sends a signal to the control device 30, and the control device 30 controls the mopping module lifting mechanism to drive the mopping module 14 to fall from the second position 36 relative to the working surface to the first position 34. It may be understood that the movable support mechanism may be alternatively controlled by the control device 30 to drive the mopping module to be lifted, and the movable support mechanism connects the support member and the body. The control device 30 controls the movable support mechanism to drive the support member to be in the extended position, so that the mopping module 14 is lifted from the first position relative to the working surface to the second position. In this case, the front end of the body is lifted as a whole, which can achieve the same effect.

In the above process, the action force of the support member on the working surface changes. When the cleaning robot 1 works normally, the action force of the support member on the working surface when the mopping module 14 is in contact with the working surface is less than the action force of the support member on the working surface when the mopping module 14 of the cleaning robot 1 is lifted.

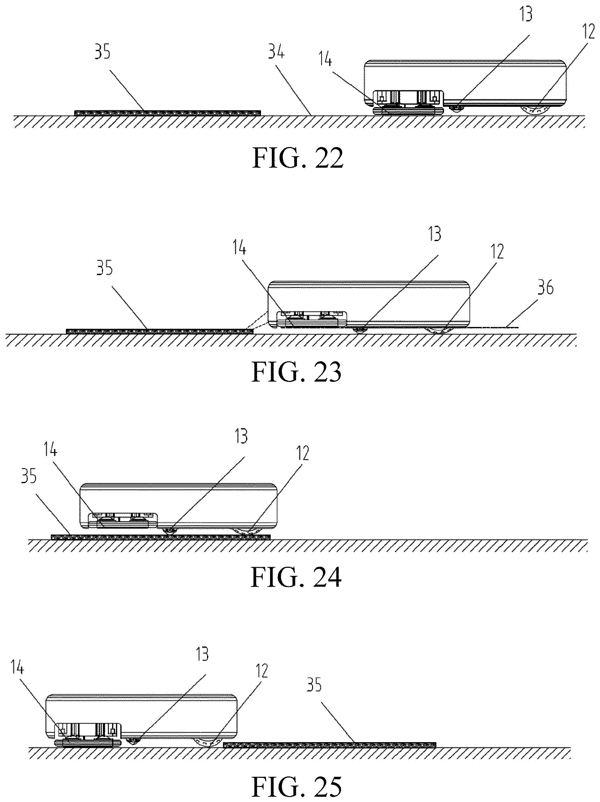

FIG. 22 to FIG. 25 are an embodiment of a process in which the cleaning robot 1 controls lifting and falling of the mopping module. When it is detected that the cleaning robot 1 works on a floor, the lifting mechanism is not started, the mopping module 14 is in close contact with the floor, and the support member is suspended in midair and is not in contact with the floor (as shown in FIG. 22).

In a moving process of the cleaning robot 1, when detecting that the working surface of the cleaning robot 1 changes from the floor state to the carpet state, the environment detection sensor sends a signal to the control device 30, the control device 30 controls the elevating motor of the mopping module lifting mechanism to perform forward rotation, and the elevating motor drives the transmission mechanism to drive the mopping module 14 to move upward, so that the mopping module 14 is lifted from the first position 34 relative to the working surface to the second position 36. Meanwhile, the support wheel 13 falls under the action of the support member adjustment mechanism to be in contact with the working surface (as shown in FIG. 23). When the cleaning robot 1 works on a carpet 35, the mopping module 14 is always in the lifted state (as shown in FIG. 24). When the cleaning robot 1 passes through the carpet 35, and when detecting again that the working surface of the cleaning robot 1 changes from the carpet state to the floor state, the environment detection sensor sends a signal to the control device 30, the control device 30 controls the elevating motor of the mopping module lifting mechanism to perform backward rotation, and the elevating motor drives the transmission mechanism to drive the mopping module 14 to move downward and to be in contact with the floor again. Meanwhile, the support wheel 13 is lifted under the action of the support member adjustment mechanism (as shown in FIG. 25). The above process not only makes it easy for the cleaning robot 1 to pass through the carpet 35, but also prevents the stains on the mop from dirtying the carpet 35.

It should be noted that, the environment detection sensor is a visual sensor, and the control device 30 determines a state of the working surface according to a change of a ground image obtained by the visual sensor. In another embodiment, the environment detection sensor is a radar sensor, and the control device 30 determines a state of the working surface according to a ground material type detected by the radar sensor. In another embodiment, the environment detection sensor is a current sensor, and the state of the working surface is determined according to a current change detected by the current sensor. For example, the current sensor detects a current change occurring when the cleaning robot 1 encounters the carpet 35 to determine the state of the working surface. In addition, the mopping module lifting mechanism may alternatively adopt another structure manner such as a swing mechanism, which can also achieve the same functional effect.

In an embodiment, the detection device 10 of the cleaning robot 1 is configured to detect the ground state. When the detection device 10 detects that the ground state is a step, the control device 30 controls the lifting mechanism to cause the mopping module 14 to be in the second position, the support member adjustment mechanism drives, when the mopping module 14 is lifted, the support member to fall, and the cleaning robot 1 continues to move forward. If the detection device 10 detects that the ground state is a carpet, the cleaning robot 1 moves backward; and when the floor is detected again, the control device 30 controls the lifting mechanism to cause the mopping module 14 to be in the first position, and the support member adjustment mechanism drives, when the mopping module falls, the support member to be retracted. If the detection device 10 detects that the ground state is a floor, the control device 30 controls the lifting mechanism to cause the mopping module 14 to be in the first position, the support member adjustment mechanism drives, when the mopping module falls, the support member to be retracted, and the cleaning robot 1 continues to move forward.

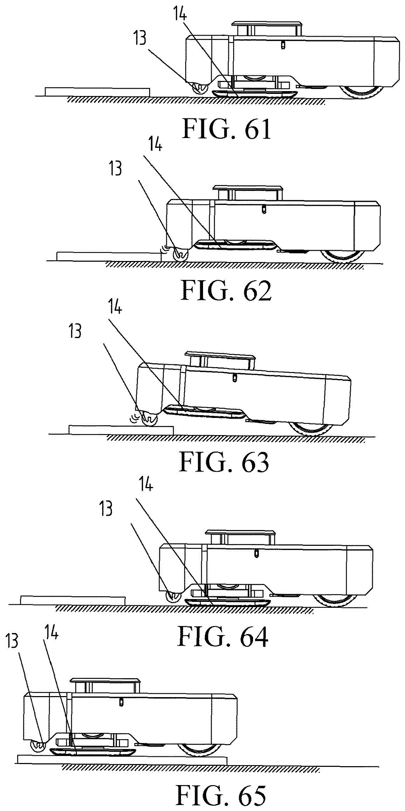

FIG. 61 to FIG. 65 are another embodiment of a process in which the cleaning robot 1 detects a ground state and controls lifting and falling of the mopping module. When it is detected that the cleaning robot 1 works on a floor, the lifting mechanism is not started, the mopping module 14 is in close contact with the floor, and the support member is suspended in midair and is not in contact with the floor (as shown in FIG. 61).

In a moving process of the cleaning robot 1, when detecting that the working surface of the cleaning robot 1 changes from a flat surface to a step, the environment detection sensor sends a signal to the control device 30, the control device 30 controls the elevating motor of the mopping module lifting mechanism to perform forward rotation, and the elevating motor drives the transmission mechanism to drive the mopping module 14 to move upward, so that the mopping module 14 is lifted from the first position 34 relative to the working surface to the second position 36. Meanwhile, the support wheel 13 falls under the action of the support member adjustment mechanism to be in contact with the working surface (as shown in FIG. 62). The cleaning robot 1 continues to move forward. If the environment detection sensor detects that the working surface is in the carpet state, the cleaning robot 1 retreats away from the carpet until it is detected again that the ground state is the floor, a signal is sent to the control device 30, the control device 30 controls the elevating motor of the mopping module lifting mechanism to perform backward rotation, and the elevating motor drives the transmission mechanism to drive the mopping module 14 to move downward to be in contact with the floor again. Meanwhile, the support wheel 13 is retracted under the action of the support member adjustment mechanism (as shown in FIG. 63 and FIG. 64). If detecting that the working surface is in the floor state, the environment detection sensor sends a signal to the control device 30, the control device 30 controls the elevating motor of the mopping module lifting mechanism to perform backward rotation, and the elevating motor drives the transmission mechanism to drive the mopping module 14 to move downward to be in contact with the floor again. Meanwhile, the support wheel 13 is retracted under the action of the support member adjustment mechanism, and the cleaning robot continues to move forward (as shown in FIG. 65). In the above process, the cleaning robot 1 retreats away from the carpet 35 after detecting the carpet. Compared with the case that the cleaning robot passes through the carpet 35 in the previous embodiment, the stains on the mop can be more effectively prevented from dirtying the carpet 35, and especially when the carpet 35 is relatively thick or the carpet wool is relatively long, the stains are prevented from dirtying or even damaging the carpet.

The environment detection sensor is a step detection sensor and a ground state detection sensor. The step detection sensor and the ground state detection sensor may be the same sensor or may be different sensors. In an embodiment, the step detection sensor is a TOF sensor, and the ground state detection sensor is an ultrasonic sensor. There is no limitation on positions and a quantity of sensors. For example, a sensor is mounted on the front end or the bottom plate of the body 11. In a specific embodiment, there are two ultrasonic sensors, which are disposed on the bottom of the body 11 of the cleaning robot 1, one of the ultrasonic sensors is an ultrasonic transmission sensor, and the other of the ultrasonic sensors is an ultrasonic receiving sensor. The TOF sensor is mounted between the ultrasonic sensors. Steps are detected through scanning and ranging of the TOF sensor or steps are detected through scanning and imaging of the TOF sensor and according to obtained image information. A carpet is detected according to strength of a signal received by the ultrasonic sensor, or a carpet is detected by calculating a distance according to transmission and receiving time points of the ultrasonic sensor.

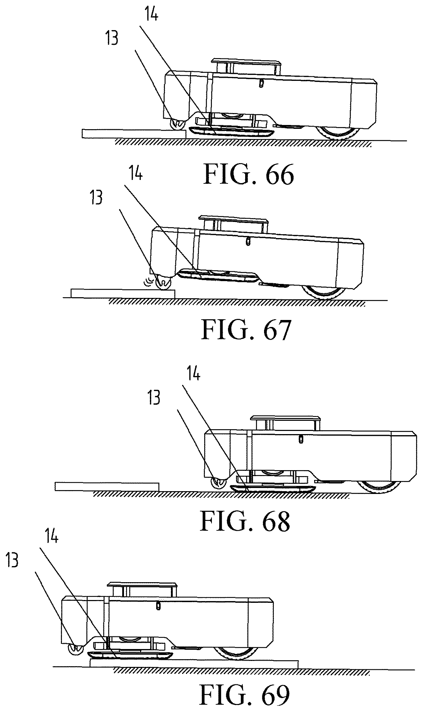

In still another embodiment, the ground state may be alternatively detected through the cooperation between the self-state detection sensor and the environment detection sensor, and lifting and falling of the mopping module are controlled according to a detection result. The self-state detection sensor is configured to detect a degree of inclination of the cleaning robot. Specifically, the self-state detection sensor is a tilt sensor such as a six-axis sensor, and the environment detection sensor is an ultrasonic sensor. The control device 30 determines, according to a detection result of the tilt sensor and a magnitude of a preset value, whether the cleaning robot 1 tilts upward or downward. When the control device 30 determines that the cleaning robot 1 tilts upward, the control device 30 controls the lifting mechanism to lift the mopping module 14 to the second position, and meanwhile, the support wheel 13 falls under the action of the support member adjustment mechanism to be in contact with the working surface (as shown in FIG. 66). The cleaning robot 1 continues to move forward. If the ultrasonic sensor detects that the working surface is in the carpet state, the cleaning robot 1 retreats away from the carpet. When the control device 30 determines that the cleaning robot 1 tilts downward, and if detecting again that the ground state is the floor, the ultrasonic sensor sends a signal to the control device 30, the control device 30 controls the elevating motor of the mopping module lifting mechanism to perform backward rotation, and the elevating motor drives the transmission mechanism to drive the mopping module 14 to move downward to be in contact with the floor again. Meanwhile, the support wheel 13 is retracted under the action of the support member adjustment mechanism (as shown in FIG. 67 and FIG. 68). If detecting that the working surface is in the floor state, the ultrasonic sensor sends a signal to the control device 30, the control device 30 controls the elevating motor of the mopping module lifting mechanism to perform backward rotation, and the elevating motor drives the transmission mechanism to drive the mopping module 14 to move downward to be in contact with the floor again. Meanwhile, the support wheel 13 is retracted under the action of the support member adjustment mechanism, and the cleaning robot continues to move forward (as shown in FIG. 67 and FIG. 69).

In an embodiment, the environment detection sensor may detect a material such as the carpet or the floor of the working surface. Further, the environment detection sensor may detect a type of floor such as wood or tile. The control device 30 controls, according to a type of floor detected by the environment detection sensor, an amount of liquid supplied to the mopping module 14 by the liquid tank 33. When the environment detection sensor detects that the floor material is a wooden material, the amount of liquid supplied to the mopping module can be appropriately reduced to prevent damage to the wooden floor caused by an excessive amount of liquid. In an embodiment, the environment detection sensor is a visual sensor, and the control device 30 determines that the working surface is the floor material according to a ground image obtained by the visual sensor. In another embodiment, the environment detection sensor is a radar sensor, and the control device 30 determines that the working surface is the type of floor according to a detection result of the radar sensor.

In an embodiment, the environment detection sensor of the cleaning robot 1 is an obstacle detection sensor. When the detection device 10 detects an obstacle, the control device 30 controls the lifting mechanism to cause the mopping module 14 to be in the second position; and after the control device 30 controls the cleaning robot to cross the obstacle, the control device 30 controls the lifting mechanism to cause the mopping module 14 to be in the first position.

Specifically, when detecting an obstacle, the obstacle detection sensor of the cleaning robot 1 sends a signal to the control device 30, and the control device 30 controls the mopping module lifting mechanism to drive the mopping module 14 to be lifted from the first position 34 relative to the working surface to the second position 36. When the control device 30 controls the cleaning robot to cross the obstacle, the control device 30 controls the mopping module lifting mechanism to drive the mopping module 14 to fall from the second position 36 relative to the working surface to the first position 34.

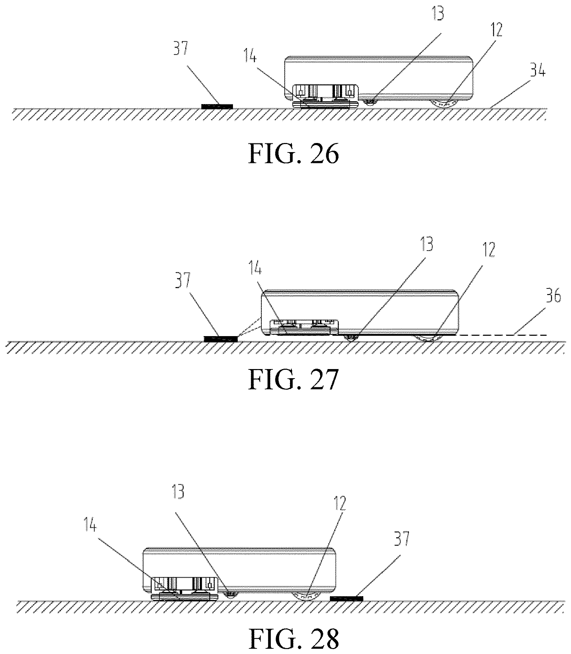

FIG. 26 to FIG. 28 are a process in which lifting and falling of the mopping module 14 are controlled when the cleaning robot 1 encounters an obstacle according to an embodiment of the present invention. When the cleaning robot 1 works on a floor, the lifting mechanism is not started, the mopping module 14 is in close contact with the floor, and the support member is suspended in midair and is not in contact with the floor (as shown in FIG. 26). In a moving process of the cleaning robot 1, an obstacle 37 in front of the cleaning robot is detected by using the obstacle detection sensor. In this case, a signal is sent to the control device 30 of the cleaning robot 1, the control device 30 controls the elevating motor of the mopping module lifting mechanism to perform forward rotation, and the elevating motor drives the transmission mechanism to drive the mopping module 14 to move upward, so that the mopping module 14 is lifted from the first position 34 relative to the working surface to the second position 36 (as shown in FIG. 27). Meanwhile, the support wheel 13 falls under the action of the support member adjustment mechanism to be in contact with the working surface, and the cleaning robot 1 continues to move forward to cross the obstacle 37. After the cleaning robot crosses the obstacle 37, the control device 30 controls the elevating motor of the mopping module lifting mechanism to perform backward rotation, and the elevating motor drives the transmission mechanism to drive the mopping module 14 to move downward, so that the mopping module 14 returns to the first position 34 in close contact with the ground (as shown in FIG. 28). Meanwhile, the support wheel 13 is lifted under the action of the support member adjustment mechanism. The above process not only makes it easy for the cleaning robot 1 to pass through the obstacle 37, but also prevents the stains on the mop from remaining on the obstacle.

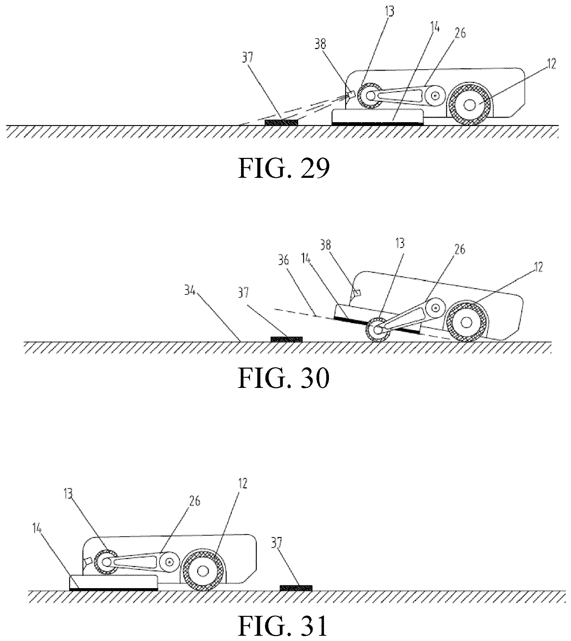

FIG. 29 and FIG. 30 are a process in which lifting and falling of the mopping module 14 are controlled when the cleaning robot 1 encounters an obstacle according to another embodiment of the present invention.

Specifically, when detecting that there is an obstacle in front of the cleaning robot 1, the obstacle detection sensor sends a signal to the control device 30, and the control device 30 controls the movable support mechanism 26 to drive the support wheel 13 to extend out of the body 11. In this way, under the action of the movable support mechanism 26, the front end of the cleaning robot is lifted, and the mopping module 14 is also lifted, making it convenient for the cleaning robot 1 to cross the obstacle. After the cleaning robot 1 crosses the obstacle, a signal is sent to the control device 30, and the control device 30 controls the movable support mechanism 26 to drive the support wheel 13 to be retracted. In this case, the mopping module 14 falls and is in contact with the working surface again.

As shown in FIG. 29 and FIG. 30, the obstacle detection sensor 38 is mounted on the body 11 of the cleaning robot, a specific position is not limited, for example, mounted on a front wall or a bottom base of the cleaning robot, and there is at least one sensor. When the cleaning robot 1 works on a floor, the lifting mechanism is not started, and the mopping module 14 is in close contact with the floor (as shown in FIG. 29). In the moving process of the cleaning robot 1, the obstacle 37 in front of the cleaning robot is detected by using the obstacle detection sensor 38. In this case, a signal is sent to the control device 30 of the cleaning robot 1, and the control device 30 controls the swing mechanism of the movable support mechanism 26 to drive the support wheel 13 to fall and to be in contact with the working surface, that is, in the extended position, so that the mopping module 14 is lifted from the first position 34 relative to the working surface to the second position 36 (as shown in FIG. 30). The cleaning robot 1 continues to move forward to cross the obstacle 37, and after the cleaning robot crosses the obstacle 37, the control device 30 controls the swing mechanism of the movable support mechanism 26 to drive the support wheel 13 to be lifted, that is, in the retracted position, so that the mopping module 14 is in the first position 34 again, that is, in the position in which the mopping module is in contact with the working surface and works normally (as shown in FIG. 31). The above process not only makes it easy for the cleaning robot 1 to pass through the obstacle 37, but also prevents the stains on the mop from remaining on the obstacle. It may be understood that the movable support mechanism 26 may alternatively adopt another structure manner such as an elevating mechanism, which can also achieve the same functional effect.

It should be noted that, in an embodiment, the obstacle detection sensor includes a visual sensor, and the control device 30 determines a type of obstacle according to an image obtained by the visual sensor. In another embodiment, the obstacle detection sensor includes an infrared sensor or a laser detection sensor, and the control device 30 determines the type of obstacle, for example, whether the obstacle is a step, according to a detection result of the infrared sensor or the laser detection sensor. In another embodiment, the obstacle detection sensor includes an ultrasonic sensor, and a distance between the cleaning robot and an obstacle is determined according to transmission and receiving time points of the ultrasonic sensor. In a specific embodiment, two ultrasonic sensors are symmetrically disposed at the front end of the cleaning robot 1. When one of the ultrasonic sensors transmits ultrasound, the other of the ultrasonic sensors does not send any ultrasound, and both of the two ultrasonic sensors receive the ultrasound. Detection regions of the two ultrasonic sensors partially overlap, and the overlapped part at least partially covers a blind zone of the two, which makes it convenient to shrink the blind zone, and better detect the obstacle.

In an embodiment, when the detection device 10 detects that the cleaning robot 1 reaches the base station 2, the control device 30 controls the lifting mechanism to lift the mopping module 14 to the second position. Certainly, before the cleaning robot 1 reaches the base station 2, the control device 30 may alternatively control the lifting mechanism to lift the mopping module 14 to the second position. Specifically, the detection device 10 includes the environment detection sensor, and the lifting mechanism includes the mopping module lifting mechanism. When the environment detection sensor detects that the cleaning robot 1 reaches the base station 2, the control device 30 controls the mopping module lifting mechanism to drive the mopping module 14 to be lifted from the first position relative to the working surface to the second position. The mopping module 14 is detachably mounted on the body 11. When the environment detection sensor detects that the cleaning robot 1 reaches a position 201 of unloading a mop, the control device 30 controls the mopping module lifting mechanism to drive the mopping module 14 to be lifted from the second position relative to the working surface to a third position of unloading the mopping module. In this case, the mopping module 14 is in contact with a top column on the body 11, and is separated from the body 11 in the third position with the action force of the top column. When the environment detection sensor detects that the cleaning robot reaches a position 202 of loading the mop, the control device 30 controls the mopping module lifting mechanism to drive the mopping module 14 to move to the first position or a fourth position. The fourth position is higher than or equal to the first position and lower than the second position. The mopping module 14 is attracted to the body 11 through magnetic attraction. Specifically, a magnet is disposed on the mopping module, and a magnetic element is disposed on the body 11. In another embodiment, when the environment detection sensor detects that the cleaning robot 1 reaches the position 201 of unloading the mop, the control device 30 controls the mopping module 14 to be separated from the body 11 in the second position relative to the working surface. Specifically, the elevating motor 15 of the mopping module lifting mechanism drives the second cam mechanism 52 to rotate, so that the mopping module 14 is in contact with the second cam mechanism 52, and is separated from the body 11 under the action of the second cam mechanism 52.

The environment detection sensor is a ranging sensor or a positioning sensor. The ranging sensor is an infrared sensor or a laser sensor or an ultrasonic sensor. The positioning sensor is a magnetic detection sensor such as a Hall effect sensor or a reed effect sensor. A position of the cleaning robot is determined by using the ranging sensor or the positioning sensor, and then the replacement of the mopping module 14 is completed.

In an embodiment, the detection device 10 of the cleaning robot 1 includes the self-state detection sensor, configured to detect a degree of staining or a degree of damage of a mop. When the degree of staining or the degree of damage of the mop reaches a preset value, a mop replacement program is started, and in the mop replacement program, the control device 30 controls the lifting mechanism to cause the mopping module 14 to be in the second position. In the mop replacement program, the control device 30 controls the cleaning robot 1 to start a base station returning program. Specifically, the lifting mechanism includes the mopping module lifting mechanism. In the mop replacement program, the control device 30 controls the mopping module lifting mechanism to cause the mopping module 14 to be in the second position. It may be understood that the lifting mechanism includes the movable support mechanism, and the movable support mechanism connects the support member and the body. The control device controls the movable support mechanism to drive the support member to be in the extended position, or to lift the mopping module from the first position relative to the working surface to the second position.

In an embodiment, the self-state detection sensor is a capacitive sensor. In another embodiment, the self-state detection sensor is a resistive sensor. In another embodiment, the self-state detection sensor is a visual sensor. When a degree of staining of a mop of the cleaning robot 1 reaches a preset value, it indicates that the mop is already relatively dirty, and needs to be replaced with a new mop. In this case, the lifting mechanism is controlled to lift the mopping module 14 to the second position. On the one hand, a case that mopping continues to be performed by using the dirty mop, making the dirty mop dirtier, or even dirtying the floor that has been cleaned, bringing very poor user experience, and failing to achieve the effect of autonomous cleaning can be prevented. On the other hand, the mopping module is lifted to the second position; and when the mop is in the position, a case that the cleaning robot cannot pass through the obstacle when encountering the obstacle can be prevented, and a case that the cleaning robot cannot pass through the carpet or even dirties the carper when encountering the carpet can be also prevented.

In an embodiment, the detection device 10 of the cleaning robot 1 includes the self-state detection sensor, configured to detect a cleaning time or a cleaning area of the cleaning robot. When the cleaning time or the cleaning area of the cleaning robot reaches a preset value, a mop replacement program is started, and in the mop replacement program, the control device 30 controls the lifting mechanism to cause the mopping module 14 to be in the second position. In the mop replacement program, the control device 30 controls the cleaning robot 1 to start a base station returning program. Specifically, the lifting mechanism includes the mopping module lifting mechanism. In the mop replacement program, the control device 30 controls the mopping module lifting mechanism to cause the mopping module 14 to be in the second position. Similarly, the lifting mechanism includes the movable support mechanism, and the movable support mechanism connects the support member and the body. The control device controls the movable support mechanism to drive the support member to be in the extended position, or to lift the mopping module from the first position relative to the working surface to the second position. In addition, the self-state detection sensor is further configured to detect a cleaning frequency of the cleaning robot, and the control device 30 increases or decreases the preset value according to the cleaning frequency to more accurately control when to replace the mop. Specifically, when the cleaning frequency of the cleaning robot is greater than or equal to a preset cleaning frequency, it indicates that a frequency at which the user cleans the ground is very high and the ground is relatively clean. Therefore, the cleaning time may be extended or the cleaning area may be increased properly before the mop replacement program is started, that is, the preset value may be increased, to fully use the mop and avoid waste. When the cleaning frequency of the cleaning robot is less than the preset cleaning frequency, it indicates that a frequency at which the user cleans the ground is relatively low and the ground is relatively dirty. Therefore, the cleaning time may be shortened or the cleaning area may be reduced properly before the mop replacement program is started, that is, the preset value may be decreased, to avoid the problem of a poor ground cleaning effect caused by untimely mop replacement. Certainly, it may be understood that a mopping module replacement time may be alternatively adjusted according to an actual cleaning frequency of the user. For example, the cleaning robot stores a cleaning frequency and a mopping module replacement time corresponding to the cleaning frequency, the user can manually enter a cleaning frequency of the user, and the cleaning robot selects a corresponding mopping module replacement time. Certainly, the user may alternatively set the cleaning frequency remotely by using a device such as an APP. In another embodiment, the mop replacement program may be alternatively started directly according to the cleaning frequency of the cleaning robot. Specifically, the self-state detection sensor is configured to detect a cleaning frequency of the cleaning robot; and when the cleaning frequency reaches a preset value, a mopping module replacement program is started, and in the mopping module replacement program, the control device controls the lifting mechanism to cause the mopping module to be in the second position.

In an embodiment, the self-state detection sensor is a timer. In another embodiment, the self-state detection sensor is a counter. In another embodiment, the self-state detection sensor is an odometer. A cleaning time of the cleaning robot is calculated according to an output value of the timer or a working area of the cleaning robot is estimated according to an output value of the odometer. A quantity of times that the user uses the cleaning robot per week or per month such as a quantity of times of power-on is recorded by using the counter, or the cleaning frequency of the cleaning robot is calculated by using a cleaning time or a cleaning area of the cleaning robot per week or per month. In another embodiment, the self-state detection sensor is a signal receiver, configured to receive a cleaning frequency or a cleaning time or a cleaning area of the cleaning robot sent by a user terminal. The signal receiver may be a wired or wireless receiver. When the signal receiver is a wireless receiver such as a Bluetooth device, the signal receiver receives a time schedule sent by the user terminal, and the time schedule includes weekly or monthly working days and/or daily working hours, or the like. After the signal receiver receives the time schedule, a working frequency of the cleaning robot is obtained.

In an embodiment, the detection device 10 of the cleaning robot 1 includes the self-state detection sensor, configured to detect a degree of inclination of the cleaning robot. Specifically, the self-state detection sensor is a tilt sensor, and the control device 30 determines, according to a detection result of the tilt sensor and a magnitude of a preset value, whether the cleaning robot 1 tilts upward or downward. When the control device 30 determines that the cleaning robot 1 tilts upward, the control device 30 controls the lifting mechanism to lift the mopping module 14 to the second position; and when the control device determines that the cleaning robot 1 tilts downward, the control device 30 controls the lifting mechanism to lower the mopping module 14 to the first position.

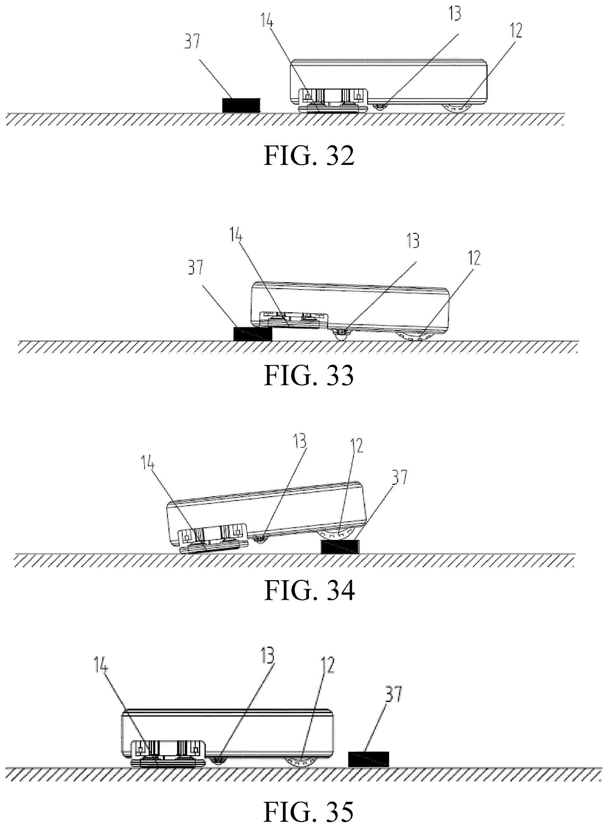

Specifically, FIG. 32 to FIG. 35 are a process in which lifting and falling of the mopping module 14 are controlled when the cleaning robot 1 encounters an obstacle according to another embodiment of the present invention. The control device 30 determines, according to a detection result of the tilt sensor and a magnitude of a preset value, whether the cleaning robot 1 tilts upward or downward. When the detection result reaches the preset value and is positive, the control device 30 determines that the cleaning robot 1 tilts upward. If the detection result reaches the preset value and is negative, the control device 30 determines that the cleaning robot 1 tilts downward. When the cleaning robot 1 works normally, the mopping module 14 is in close contact with the floor (as shown in FIG. 32). When the cleaning robot needs to cross the obstacle 37, the front end of the body of the cleaning robot is lifted, the tilt sensor detects that the cleaning robot 1 tilts, and the control device 30 determines, according to a detection result of the tilt sensor, that the cleaning robot 1 tilts upward. In this case, the control device 30 controls the mopping module lifting mechanism to lift the mopping module 14 to the second position (as shown in FIG. 33). When the cleaning robot 1 moves away from the obstacle 37, a tail portion of the body of the cleaning robot is lifted, the tilt sensor detects that the cleaning robot 1 tilts, the control device 30 determines, according to a detection result of the tilt sensor, that the cleaning robot 1 tilts downward, and the control device controls the mopping module lifting mechanism to lower the mopping module 14 to the first position (as shown in FIG. 34 and FIG. 35). After crossing the obstacle, the cleaning robot 1 continues to perform mopping work.

The tilt sensor may be a gyroscope or may be a six-axis sensor. The degree of inclination of the cleaning robot 1 is detected by using the tilt sensor, to determine a posture direction of the cleaning robot, and then the lifting and falling of the mopping module 14 are controlled, which is low in cost, does not require any complex algorithm, and is simple and reliable.

In an embodiment, the control device 30 is configured to detect a battery level of a power supply device 60, for example, may detect a voltage or a current of the power supply device 60. When the voltage of the power supply device 60 is less than a preset value V1, the control device 30 determines that the cleaning robot 1 is insufficient in voltage of a battery and starts to return to the base station for charging. In this case, the control device 30 controls the cleaning robot 1 to start to return to the base station, and meanwhile the control device 30 controls the lifting mechanism to cause the mopping module 14 to be in the second position. Specifically, the control device 30 controls the mopping module lifting mechanism to lift the mopping module 14 from the first position relative to the working surface to the second position. It may be understood that the control device 30 may alternatively control the movable support mechanism 26 to drive the support wheel 13 to be in the extended position, so that the mopping module 14 is lifted from the first position relative to the working surface to the second position.

An advantage of this practice is as follows: The cleaning robot 1 is insufficient in voltage due to a long time of working in most cases, resulting in excessively fast power consumption; in this case, the mop 28 is relatively dirty, and if the mop 28 is not lifted in time, the cleaning robot 1 dirties the cleaned ground again in the returning path; and in addition, a case that the cleaning robot cannot pass through the obstacle or is trapped or stuck and cannot escape, resulting in over-discharge of the power supply device of the cleaning robot to damage the battery, when encountering the obstacle in the process of returning for charging can be also prevented.

Still further, when the cleaning robot returns to the base station for charging or before charging, the mopping module is unloaded from the body, and a specific unloading manner is the same as the above. Details are not described herein again. An advantage of this practice is that, on the one hand, a safety problem caused because water on the mop is in contact with a charging electrode plate when the cleaning robot is charged is avoided; and on the other hand, a problem that the water on the mop drips onto the floor to wet the floor and further damage the floor may be also prevented.

In an embodiment, the detection device 10 includes the self-state detection sensor. When the self-state detection sensor detects that the cleaning robot 1 is trapped or stuck, the control device 30 controls the lifting mechanism to cause the mopping module 14 to be in the second position. Specifically, the lifting device includes the mopping module lifting mechanism. When the detection device 10 detects that the cleaning robot 1 is trapped or stuck, the control device 30 controls the mopping module lifting mechanism to lift the mopping module 14 from the first position relative to the working surface to the second position. It may be understood that the movable support mechanism may be alternatively controlled by the control device 30 to drive the mopping module to be lifted, and the movable support mechanism connects the support member and the body. The control device 30 controls the movable support mechanism to drive the support member to be in the extended position, so that the mopping module 14 is lifted from the first position relative to the working surface to the second position. In this case, the front section of the body is lifted as a whole, which can achieve the same effect.

In an embodiment, the self-state detection sensor is a collision sensor, and when a detected collision frequency is greater than a preset value, the control device 30 determines that the cleaning robot 1 is trapped. In another embodiment, the self-state detection sensor is a speed sensor or an acceleration sensor. Specifically, the detection device 10 includes a wheel speed sensor such as a photoelectric encoder or a Hall sensor. When a detected wheel speed is continuously not in a preset value range, the control device 30 determines that the cleaning robot 1 is trapped. In another embodiment, the self-state detection sensor is a positioning sensor such as a visual sensor or a laser distance sensor, configured to obtain a current position of the cleaning robot, and when the current position remains unchanged within a preset time, the control device 30 determines that the cleaning robot is trapped or stuck. During work, the cleaning robot 1 inevitably encounters objects such as a wire. After the cleaning robot 1 is trapped or stuck by such charged objects, if the mopping module 14 is not lifted in time, on the one hand, the cleaning robot 1 is not easy to escape; and on the other hand, if the wet mop 21 is placed on such objects for a long time, the wire may be wetted, which causes danger. In addition, during work, if encountering a narrow passage, the cleaning robot is trapped or stuck. If the mopping module is not lifted in time, the mopping module is in contact with the floor for a long time, and especially when the floor is a wooden floor, it is easy to damage the floor. When the cleaning robot encounters a pool or the like, and moving wheels of the cleaning robot slip and cannot move forward, the mopping module is lifted in time, and the support wheel provides front-end support, so that the cleaning robot is easier to escape. If the cleaning robot encounters a protrusion and is trapped or stuck, the mopping module is lifted in time, so that the cleaning robot may escape in time.

In the above process, the cleaning robot completes the lifting and replacement of the mop completely autonomously without manual intervention, has a high degree of intelligence, reduces the burden on people, and is efficient and hygienic.

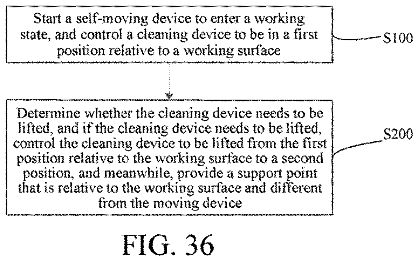

FIG. 36 is a flowchart of a control method for a cleaning robot according to the present invention. This embodiment provides a control method for a cleaning robot, which is used for controlling the cleaning robot in Embodiment 1 of the present invention. The cleaning robot 1 includes a body 11; a moving device 40, configured to support the body 11 and drive the cleaning robot 1 to move; a cleaning device 50, configured to be mounted on the body 11 and perform cleaning work on a working surface; a control device 30, configured to control the moving device 40 to drive the cleaning robot 1 to move; and a power device, configured to supply power to the moving device 40. The control method specifically includes the following steps.

S100. Start a cleaning robot to enter a working state, and control a cleaning device to be in a first position relative to a working surface.

S200. Determine whether the cleaning device needs to be lifted, and if the cleaning device needs to be lifted, control the cleaning device to be lifted from the first position relative to the working surface to a second position, and meanwhile, provide a support point that is relative to the working surface and different from the moving device.

In an embodiment, the cleaning device 50 of the cleaning robot of the present invention includes a mopping module.

In an embodiment, step S200 in this embodiment of the present invention specifically includes:
when an obstacle is detected, determining that the mopping module needs to be lifted, and controlling the mopping module to be lifted to the second position, and after the cleaning robot crosses the obstacle, controlling the mopping module to return to the first position.

In an embodiment, step S200 in this embodiment of the present invention specifically includes:
when it is detected that a degree of staining or a degree of damage of the mopping module reaches a preset value, starting a mopping module replacement program, and in the mopping module replacement program, determining that the mopping module needs to be lifted, and controlling the mopping module to be lifted to the second position.

In an embodiment, step S200 in this embodiment of the present invention specifically includes:
when it is detected that a cleaning frequency of the cleaning robot reaches a preset value, starting a mopping module replacement program, and in the mopping module replacement program, determining that the mopping module needs to be lifted, and controlling the mopping module to be lifted to the second position.

In an embodiment, step S200 in this embodiment of the present invention specifically includes:
when it is detected that a cleaning time or a cleaning area of the cleaning robot reaches a preset value, starting a mopping module replacement program, and in the mopping module replacement program, determining that the mopping module needs to be lifted, and controlling the mopping module to be lifted to the second position.

In an embodiment, step S200 in this embodiment of the present invention specifically includes:
when a carpet is detected, determining that the mopping module needs to be lifted, and controlling the mopping module to be lifted to the second position; and when a floor is detected, controlling the mopping module to return to the first position.

In an embodiment, step S200 in this embodiment of the present invention specifically includes:
when a detected battery level is less than a preset value, starting a base station returning program, and in the base station returning program, determining that the mopping module needs to be lifted, and controlling the mopping module to be lifted to the second position.

In an embodiment, step S200 in this embodiment of the present invention specifically includes:
when it is detected that the cleaning robot is trapped or stuck, determining that the mopping module needs to be lifted, and controlling the mopping module to be lifted to the second position.

In an embodiment, when a detected collision frequency is greater than a preset value, it is determined that the cleaning robot is trapped.

In an embodiment, when a detected wheel speed or acceleration is continuously not in a preset value range, it is determined that the cleaning robot is trapped.

In an embodiment, when a current position of the cleaning robot remains unchanged within a preset time, it is determined that the cleaning robot is trapped or stuck.

In an embodiment, step S200 in this embodiment of the present invention specifically includes:
when it is determined that the cleaning robot tilts upward, determining that the mopping module needs to be lifted, and controlling the mopping module to be lifted to the second position; and when it is determined that the cleaning robot tilts downward, controlling the mopping module to be lowered to the first position.

In an embodiment, step S200 in this embodiment of the present invention specifically includes:
when it is detected that the cleaning robot reaches a base station, determining that the mopping module needs to be lifted, and controlling the mopping module to be lifted to the second position.

In an embodiment, when it is detected that the cleaning robot reaches a position of unloading the mopping module, the mopping module is controlled to be lifted from the second position relative to the working surface to a third position of unloading the mopping module or the mopping module is controlled to be separated from the body in the second position relative to the working surface.

In an embodiment, an electromagnet matching a magnet on the mopping module is disposed on the body, and when it is detected that the cleaning robot reaches the position of unloading the mopping module, the mopping module is controlled to be separated from the body in the second position by controlling a magnitude or a direction of a current of the electromagnet.

In an embodiment, when it is detected that the cleaning robot reaches a position of loading the mopping module, the mopping module is controlled to move to the first position or a fourth position. In a process of loading a mop, in an embodiment, the mopping module is attracted through a magnetic effect. Therefore, as long as a distance between the mopping module and the body is controlled to fall within a range of magnetic force, a new mopping module can be attracted.

In an embodiment, the fourth position is higher than or equal to the first position and lower than the second position.

In an embodiment, the mopping module is disposed at a front end of the body.

In an embodiment, the support point is located between the mopping module and the moving device.

In an embodiment, the support point is located in front of the mopping module.

According to the embodiments of the present invention, the control device 30 of the cleaning robot 1 controls the lifting and falling of the mopping module according to a detection result of a detection device, so that the cleaning robot can cross an obstacle, thereby enhancing the passability of the cleaning robot without contaminating the obstacle. A case that the cleaning robot is stuck is avoided, and it is convenient for the cleaning robot to get out of trouble in time when being stuck. The cleaning robot can pass through a carpet or the like very well without dirtying the carpet, and meanwhile the cleaning robot can automatically return to the base station to replace an old mop with a new mop and recycle the old mop, which is more intelligent, and reduces the burden on people, thereby avoiding secondary contamination and cross contamination caused because the mopping module is not lifted in time and achieving better user experience.

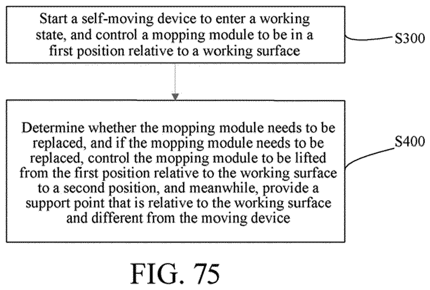

FIG. 75 is a flowchart of a control method for a cleaning robot according to the present invention. This embodiment provides a control method for a cleaning robot, which is used for controlling the cleaning robot in Embodiment 1 of the present invention. The cleaning robot 1 includes a body 11; a moving device 40, configured to support the body 11 and drive the cleaning robot 1 to move; a cleaning device 50, configured to be mounted on the body 11 and perform cleaning work on a working surface; a control device 30, configured to control the moving device 40 to drive the cleaning robot 1 to move; and a power device, configured to supply power to the moving device 40. The control method specifically includes the following steps.

S300. Start a cleaning robot to enter a working state, and control a mopping module to be in a first position relative to a working surface.

S400. Determine whether the mopping module needs to be replaced, and if the mopping module needs to be replaced, control the mopping module to be lifted from the first position relative to the working surface to a second position, and meanwhile, provide a support point that is relative to the working surface and different from the moving device.

In an embodiment, wherein when it is detected that a degree of staining or a degree of damage of the mopping module reaches a preset value, it is determined that the mopping module needs to be replaced; and a mopping module replacement program is started, and in the mopping module replacement program, the mopping module is controlled to be lifted to the second position.

In an embodiment, wherein when it is detected that a cleaning time or a cleaning area of the cleaning robot reaches a preset value, it is determined that the mopping module needs to be replaced; and a mopping module replacement program is started, and in the mopping module replacement program, the mopping module is controlled to be lifted to the second position.

In an embodiment, wherein when it is detected that a cleaning frequency of the cleaning robot reaches a preset value, it is determined that the mopping module needs to be replaced; and a mopping module replacement program is started, and in the mopping module replacement program, the mopping module is controlled to be lifted to the second position.

In an embodiment, wherein when it is detected that a battery level is lower than a preset value, it is determined that the mopping module needs to be replaced; and a mopping module replacement program is started, and in the mopping module replacement program, the mopping module is controlled to be lifted to the second position.

In an embodiment, wherein when it is detected that the cleaning robot reaches a position of unloading the mopping module, the mopping module is controlled to be separated from the body.

According to the embodiments of the present invention, when the cleaning robot 1 determines that a mop needs to be replaced, the mopping module is lifted in time, thereby avoiding secondary contamination and cross contamination caused because the mopping module is not lifted in time, making the replacement or unloading of the mop more intelligent, reducing burden on people, and achieving better user experience.

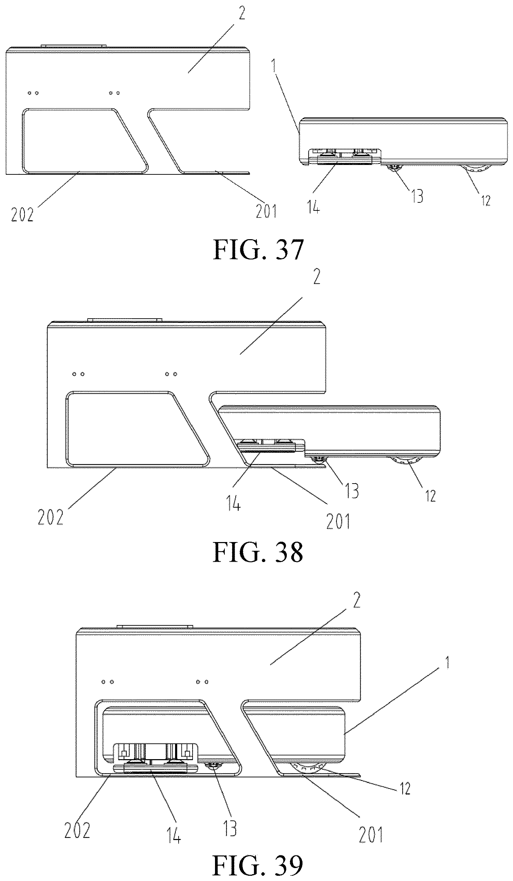

FIG. 37 to FIG. 39 are schematic diagrams of a process in which a cleaning robot automatically replaces a mop according to an embodiment of the present invention. The base station 2 is the foregoing base station. The cleaning robot 1 includes a body 11; a moving device 40, configured to support the body 11 and drive the cleaning robot 1 to move; a cleaning device 50, configured to be mounted on the body 11, where the cleaning device 50 includes a mopping module 14; a control device 30, configured to control the moving device 40 to drive the cleaning robot 1 to move; and a power device, configured to supply power to the moving device 40. The cleaning robot 1 further includes a lifting device, where the lifting device includes a lifting mechanism and a support member, and the control device can control the lifting mechanism to lift the mopping module 14 from a first position relative to a working surface to a second position; and the support member is configured to provide a support point that is relative to the working surface and different from the moving device 40 when the mopping module 14 is lifted.

The lifting mechanism of the cleaning robot 1 includes a mopping module lifting mechanism. The mopping module 14 is detachably mounted on the body 11, and specifically, the mopping module 14 is disposed on the body 11 through magnetic attraction. When a detection device 10 detects that the mopping module needs to be replaced, for example, when a degree of staining or a degree of damage of a mop reaches a preset value, the control device 30 controls the cleaning robot 1 to start a mopping module replacement program and to return to the base station 2 in the mopping module replacement program, and controls the mopping module lifting mechanism to lift the mopping module 14 from the first position relative to the working surface to the second position. Meanwhile, the support member includes a support wheel 13, and the support wheel 13 provides a support point that is relative to the working surface and different from a driving wheel 12 when the mopping module 14 is lifted. Specifically, the lifting device includes a support member adjustment mechanism, and the support member adjustment mechanism drives, when the mopping module 14 is lifted, the support wheel to fall, to provide the support point (as shown in FIG. 37). The detection device 10 includes a capacitive sensor or a resistive sensor, and the control device 30 determines, according to a comparison between a preset value and a capacitance value or a resistance value of a mop outputted by the detection device 10, whether the mop needs to be replaced.

An infrared transmission sensor is disposed on the base station 2, and the detection device 10 on the cleaning robot 1 includes an infrared receiving sensor. When the cleaning robot 1 starts returning, the infrared receiving sensor is started and is configured to receive a signal from the infrared transmission sensor of the base station 2. The detection device 10 detects a strength of the received signal, and the control device 30 determines, according to the strength of the detection signal of the detection device 10, whether the cleaning robot 1 reaches the base station 2. When the cleaning robot 1 detects that the strength of the signal is greater than a preset strength value, it indicates that the cleaning robot 1 has fully approached the base station 2. In this case, the infrared transmission sensor stops transmitting a signal, and meanwhile, the cleaning robot 1 stops detecting the signal. If the strength of the signal is not greater than the preset strength value, the cleaning robot 1 continues to approach the base station 2 until the strength of the signal detected by the cleaning robot 1 is greater than the preset strength value.

It may be understood that the detection device 10 of the cleaning robot 1 may alternatively include another ranging sensor such as an ultrasonic sensor. There are two ultrasonic sensors, which are respectively disposed at the front end of the cleaning robot 1 at intervals. Certainly, the detection device 10 may alternatively include a positioning sensor, configured to determine a position of the base station 2 and guide the cleaning robot 1 to move toward the position of the base station 2.

In an embodiment, the positioning sensor is a Hall effect sensor, a positioning block corresponding to the positioning sensor is pre-mounted on the base station 2, and the positioning block may be a magnet or a magnetic steel. When the cleaning robot 1 continues to move toward a bottom plate of the base station after reaching the base station 2, the detection device 10 is configured to detect whether a value of a detection signal outputted by the positioning sensor reaches a preset value, and the control device 30 determines a position of the cleaning robot 1 on the bottom plate 207 of the base station according to an output result of the detection device 10. The value of the outputted detection signal herein may be a magnitude of a strength of the detection signal that is outputted by the positioning block and that is detected by the positioning sensor, for example, reflected as a current value or a voltage value. Alternatively, the value of the outputted detection signal may be a digital value, obtained after signal processing such as analog-to-digital conversion, of the detection signal that is outputted by a limit element and that is detected by a positioning device. Certainly, the positioning sensor may alternatively include a reed effect sensor.

If the value of the detection signal outputted by the positioning sensor reaches a first preset value, a first docking position 201 of the base station 2 is determined through positioning, and the control device 30 controls the cleaning robot 1 to stop moving. When the cleaning robot 1 reaches the first docking position 201 of the base station 2, that is, reaches a position of unloading a mop in the base station 2, the control device 30 controls the mopping module lifting mechanism to control the mopping module 14 to be lifted from the second position relative to the working surface to a third position of unloading a mop (as shown in FIG. 38). In this case, a top column disposed on the body 11 is in contact with the mopping module 14 and provides a downward action force to the mopping module 14, to overcome attraction between the mopping module 14 and the body 11, so that the mopping module 14 is separated from the body 11. It may be understood that a manner in which the control device 30 controls the separation of the mopping module 14 may be alternatively in another form, and it is not necessary to control the mopping module lifting mechanism to control the mopping module 14 to be lifted from the second position relative to the working surface to the third position of unloading the mop. Alternatively, the mopping module 14 may be controlled by the control device 30 to be separated from the body 11 at least in the second position relative to the working surface. For example, an electromagnet is disposed on the body 11 and matches a magnet on the mopping module 14, the control device 30 controls, by interrupting of a current or changing a direction of a current of the electromagnet, the mopping module 14 to be separated from the body 11 in the second position relative to the working surface. Alternatively, the elevating motor 15 of the mopping module lifting mechanism may drive the second cam mechanism 52 to rotate, so that the mopping module 14 is in contact with the second cam mechanism 52 and is separated from the body 11 under the action of the second cam mechanism 52.

Through a new mop groove 203 of the base station 2, a new mopping module is placed in a second docking position 202, that is, a position of loading a mop in the base station, of the base station 2 under the action of the mopping module replacement device. After the mopping module 14 is separated from the body, the cleaning robot 1 continues to move toward the base station. If a value of the detection signal outputted by the positioning sensor reaches a second preset value, the second docking position 202 of the base station 2 is determined through positioning, and the control device 30 controls the cleaning robot 1 to stop moving and controls the mopping module lifting mechanism of the cleaning robot 1 to cause the mopping module lifting mechanism to fall to a position in which the mopping module lifting mechanism is attracted to a new mopping module, for example, the first position (as shown in FIG. 39). After the new mopping module is loaded, the cleaning robot 1 moves away from the base station 2. After the cleaning robot moves away from the base station 2, an old mop is recycled to an old mop groove 204 under the action of the mopping module replacement device.

In the above process, the cleaning robot 1 can automatically return to the base station 2 to replace the mopping module 14, which is more intelligent. A particular quantity of new mopping modules is placed in the new mop groove. Therefore, there is no need of manual participation for a long period of time, thereby reducing burden on people. The mop of the mopping module may adopt a disposable wet wipe, and the recycled mopping module does not need to be manually cleaned, which is clean and hygienic.

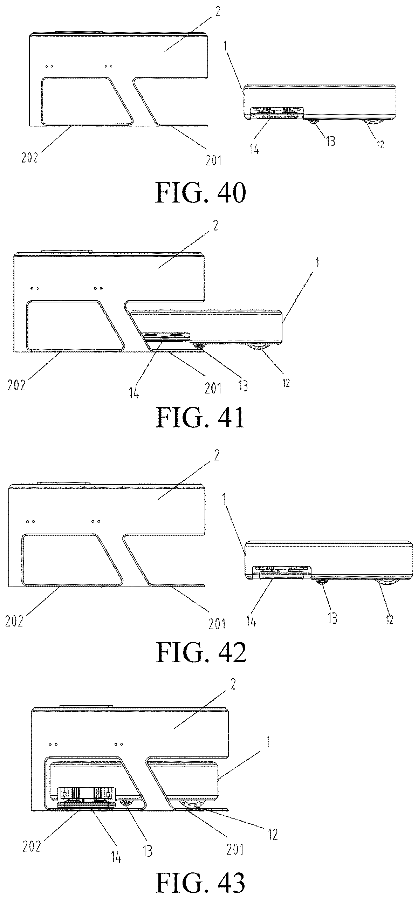

FIG. 40 to FIG. 43 are schematic diagrams of a process in which a cleaning robot automatically replaces a mop according to another embodiment of the present invention. A difference between the mop replacement process and that shown in FIG. 35 to FIG. 37 is in that when the cleaning robot 1 reaches the first docking position 201 of the base station 2, that is, reaches the position of unloading the mop in the base station 2, and after the mopping module 14 is separated from the body 11 in the docking position, the cleaning robot 1 retreats away from the base station 2 instead of continuing to move toward the base station 2 (as shown in FIG. 42). After the cleaning robot 1 retreats to the outside of the base station 2, the old mopping module is unloaded in the first docking position 201 and is recycled to the old mop groove under the action of an old mop recycling device. In this case, the cleaning robot 1 continues to move toward the base station 2 until the cleaning robot reaches the second docking position 202 of the base station 2, repeats the foregoing process until the old mop is replaced with a new mop, and moves away from the base station 2.

An advantage of the foregoing automatic mop replacement process is that before the cleaning robot mounts a new mop, an old mop in the first docking position of the base station has been recycled, to avoid a case that the driving wheel or the support wheel is dirtied when the wheel moves on the old mop and then the working region is dirtied when the cleaning robot enters the working region to work, thereby achieving a better cleaning effect.

In another embodiment, the cleaning robot 1 may replace a mop in the base station 2 and may perform charging in the base station 2. In this case, the cleaning robot 1 includes a first charging interface, and the base station 2 includes a second charging interface. When the cleaning robot 1 is docked with the base station 2, the first charging interface is aligned with the second charging interface. In an optional implementation, the first charging interface in this embodiment includes a wireless charging receiving end, and the second charging interface includes a wireless charging transmitting end. When the cleaning robot 1 completes docking, the wireless charging receiving end is aligned with the wireless charging transmitting end. In another optional implementation, the first charging interface in this embodiment includes a first conductive terminal, and the second charging interface includes a second conductive terminal. When the cleaning robot 1 completes docking, the first conductive terminal is aligned with the second conductive terminal. The first conductive terminal includes a charging connector, and the second conductive terminal includes a charging electrode plate. Alternatively, the first conductive terminal includes a charging connector, and the second conductive terminal includes a charging bar, or the like. When the cleaning robot 1 returns to the base station 2 for charging or before charging, the mopping module 14 is unloaded from the body 11, a specific unloading manner is the same as the above. Details are not described herein again. An advantage of this practice is that, on the one hand, a safety problem caused because water on the mop is in contact with a charging electrode plate when the cleaning robot is charged is avoided; and on the other hand, a problem that the water on the mop drips onto the floor to wet the floor and further damage the floor may be also prevented. Moreover, if the cleaning robot is charged in a mop replacement position, a case that the water on the mop drips into the position and then wets or dirties a clean mop when a mop needs to be replaced next time is avoided.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

Obviously, the foregoing embodiments are merely examples for clear description, and are not intended to limit the implementations. A person of ordinary skill in the art may further make other various forms of changes or variations on the basis of the foregoing descriptions. It is neither necessary nor possible to exhaust all the embodiments herein. The obvious changes and modifications derived from the foregoing descriptions still fall within the protection scope, which is defined by the claims, of this application.

## Claims

1. A cleaning robot (1), comprising: a body (11);
a moving device (40), configured to support the body (11) and drive the cleaning robot (1) to move on a working surface;
a cleaning device (50), configured to be mounted on the body (11) and perform cleaning work on the working surface;
a control device (30), configured to control the moving device (40) to drive the cleaning robot (1) to move; and
a power device (70), configured to supply power to the moving device (40), wherein
the cleaning device (50) comprises a mopping module (14), and the mopping module (14) is detachably mounted on the body (11); the cleaning robot (1) further comprises a lifting device, the lifting device comprises a lifting mechanism, and the control device (30) is configured to control the lifting mechanism to lift the mopping module (14) from a first position relative to the working surface to a second position; and the control device (30) is configured to control the mopping module (14) to be separated from the body (11) in at least the second position.

2. The cleaning robot (1) according to claim 1, wherein the lifting device comprises a support member, wherein the support member is configured to provide a support point that is relative to the working surface when the mopping module (14) is lifted, and that is different from the moving device.

3. The cleaning robot (1) according to claim 1, wherein the mopping module (14) comprises a mopping plate, and the mopping plate is configured to detachably mount a wiping member.

4. The cleaning robot (1) according to claim 2, wherein an action force of the support member on the working surface when the mopping module (14) is in the second position is greater than an action force of the support member on the working surface when the mopping module (14) is in the first position.

5. The cleaning robot (1) according to claim 2, wherein the lifting mechanism comprises a mopping module lifting mechanism configured to drive the mopping module (14) to be lifted from the first position relative to the working surface to the second position.

6. The cleaning robot (1) according to claim 5, wherein the mopping module lifting mechanism comprises an elevating mechanism, the elevating mechanism comprises an elevating motor (15) and a transmission mechanism, and the elevating motor (15) drives the transmission mechanism to drive the mopping module (14) to move upward or downward.

7. The cleaning robot (1) according to claim 1, further comprising an unloading device, wherein the unloading device is disposed on the body (11), and the control device (30) is configured to control the unloading device to cause the mopping module (14) to be separated from the body (11) at least in the second position.

8. The cleaning robot (1) according to claim 5, wherein a protrusion device is downwardly disposed on the body (11), and when the control device (30) controls the mopping module lifting mechanism to drive the mopping module (14) to be lifted from the second position relative to the working surface to a third position of unloading the mopping module (14) and be in contact with the protrusion device, the protrusion device applies a downward force to the mopping module (14), so that the mopping module (14) is separated from the body (11) in the third position.

9. The cleaning robot (1) according to claim 1, further comprising a mopping module detection device, wherein the mopping module detection device is disposed on the body (11) and is configured to detect whether the mopping module (14) is disposed on the body (11) and send a detection signal to the control device (30), and the control device (30) is configured to determine, based on presence or absence of the detection signal, whether the mopping module (14) is disposed on the body (11).

10. The cleaning robot (1) according to claim 5, wherein the support member is movably connected to the body (11), and a distance between the support member and the top of the body (11) when the mopping module (14) is in the second position is greater than a distance between the support member and the top of the body (11) when the mopping module (14) is in the first position.

11. The cleaning robot (1) according to claim 2, wherein the lifting mechanism comprises a movable support mechanism, and the movable support mechanism connects the support member and the body (11); the control device (30) controls the movable support mechanism to drive the support member to move to an extended position, so that the mopping module (14) is lifted from the first position relative to the working surface to the second position; and the control device (30) controls the movable support mechanism to drive the support member to move to a retracted position, so that the mopping module (14) falls from the second position relative to the working surface to the first position.

12. The cleaning robot (1) according to claim 1, further comprising a detection device (10), wherein the control device (30) is configured to control, according to a detection result of the detection device (10), the lifting mechanism to adjust a position of the mopping module (14) relative to the working surface.

13. The cleaning robot (1) according to claim 12, wherein the detection device (10) comprises an environment detection sensor and/or a self-state detection sensor, optionally wherein when the environment detection sensor detects that the cleaning robot (1) reaches a base station (2), the control device (30) controls the lifting mechanism to lift the mopping module (14) to the second position.

14. A control method for a cleaning robot (1), wherein the cleaning robot (1) comprises:
a body (11); a moving device (40), configured to support the body (11) and drive the cleaning robot (1) to move; a cleaning device (50), configured to be mounted on the body (11) and perform cleaning work on a working surface; a control device (30), configured to control the moving device (40) to drive the cleaning robot (1) to move; and a power device (70), configured to supply power to the moving device (40); the cleaning device (50) comprises a mopping module (14), and the mopping module (14) is detachably mounted on the body (11); and the control method comprises the following steps:
starting the cleaning robot (1) to enter a working state, and controlling the mopping module (14) to be in a first position relative to the working surface; and
determining whether the mopping module (14) needs to be replaced, and if the mopping module (14) needs to be replaced, controlling the mopping module (14) to be lifted from the first position relative to the working surface to a second position.

15. The control method for a cleaning robot (1) according to claim 14, further comprising:
providing a support point that is relative to the working surface and that is different from the moving device (40), while the mopping module (14) is lifted from the first position relative to the working surface to a second position.

## Patentansprüche

1. Reinigungsroboter (1), umfassend: einen Körper (11) ;
eine Bewegungsvorrichtung (40), die dazu ausgelegt ist, den Körper (11) zu stützen und den Reinigungsroboter (1) in eine Bewegung auf einer Arbeitsfläche anzutreiben; eine Reinigungsvorrichtung (50), die dazu ausgelegt ist, auf dem Körper (11) montiert zu sein und Reinigungsarbeit auf der Arbeitsfläche durchzuführen;
eine Steuervorrichtung (30), die dazu ausgelegt ist, die Bewegungsvorrichtung (40) zum Antreiben des Reinigungsroboters (1) in eine Bewegung zu steuern; und eine Leistungsvorrichtung (70), die dazu ausgelegt ist, die Bewegungsvorrichtung (40) mit Leistung zu versorgen, wobei
die Reinigungsvorrichtung (50) ein Wischmodul (14) umfasst, und das Wischmodul (14) abnehmbar auf dem Körper (11) montiert ist; wobei der Reinigungsroboter (1) ferner eine Hubvorrichtung umfasst, wobei die Hubvorrichtung einen Hubmechanismus umfasst, und die Steuervorrichtung (30) dazu ausgelegt ist, den Hubmechanismus zum Anheben des Wischmoduls (14) von einer ersten Position relativ zu der Arbeitsfläche zu einer zweiten Position zu steuern; und die Steuervorrichtung (30) dazu ausgelegt ist, das Wischmodul (14) zu steuern, so dass es in zumindest der zweiten Position von dem Körper (11) getrennt wird.

2. Reinigungsroboter (1) nach Anspruch 1, wobei die Hubvorrichtung ein Stützelement umfasst, wobei das Stützelement dazu ausgelegt ist, einen Stützpunkt bereitzustellen, der relativ zu der Arbeitsfläche ist, wenn das Wischmodul (14) angehoben wird, und der von der Bewegungsvorrichtung unterschiedlich ist.

3. Reinigungsroboter (1) nach Anspruch 1, wobei das Wischmodul (14) eine Wischplatte umfasst, und die Wischplatte dazu ausgelegt ist, ein Abwischelement abnehmbar zu montieren.

4. Reinigungsroboter (1) nach Anspruch 2, wobei eine Aktionskraft des Stützelements auf der Arbeitsfläche, wenn sich das Wischmodul (14) in der zweiten Position befindet, größer ist als eine Aktionskraft des Stützelements auf der Arbeitsfläche, wenn sich das Wischmodul (14) in der ersten Position befindet.

5. Reinigungsroboter (1) nach Anspruch 2, wobei der Hubmechanismus einen Wischmodulhubmechanismus umfasst, der dazu ausgelegt ist, das Wischmodul (14) anzutreiben, so dass es von der ersten Position relativ zu der Arbeitsfläche zu der zweiten Position angehoben wird.

6. Reinigungsroboter (1) nach Anspruch 5, wobei der Wischmodulhubmechanismus einen Hebemechanismus umfasst, wobei der Hebemechanismus einen Hebemotor (15) und einen Übertragungsmechanismus umfasst, und der Hebemotor (15) den Übertragungsmechanismus zum Antreiben des Wischmoduls (14) in eine Bewegung nach oben oder nach unten antreibt.

7. Reinigungsroboter (1) nach Anspruch 1, ferner umfassend eine Entladevorrichtung, wobei die Entladevorrichtung auf dem Körper (11) angeordnet ist, und die Steuervorrichtung (30) dazu ausgelegt ist, die Entladevorrichtung zu steuern, um zu bewirken, dass das Wischmodul (14) zumindest in der zweiten Position von dem Körper (11) getrennt wird.

8. Reinigungsroboter (1) nach Anspruch 5, wobei eine Vorsprungsvorrichtung nach unten auf dem Körper (11) angeordnet ist, und wenn die Steuervorrichtung (30) den Wischmodulhubmechanismus zum Antreiben des Wischmoduls (14) steuert, so dass es von der zweiten Position relativ zu der Arbeitsfläche zu einer dritten Position zum Entladen des Wischmoduls (14) angehoben wird und in Kontakt mit der Vorsprungsvorrichtung kommt, die Vorsprungsvorrichtung eine nach unten gerichtete Kraft auf das Wischmodul (14) aufbringt, so dass das Wischmodul (14) in der dritten Position von dem Körper (11) getrennt wird.

9. Reinigungsroboter (1) nach Anspruch 1, ferner umfassend eine Wischmodulerkennungsvorrichtung, wobei die Wischmodulerkennungsvorrichtung auf dem Körper (11) angeordnet und dazu ausgelegt ist, zu erkennen, ob das Wischmodul (14) auf dem Körper (11) angeordnet ist, und ein Erkennungssignal an die Steuervorrichtung (30) zu senden, und wobei die Steuervorrichtung (30) dazu ausgelegt ist, basierend auf einem Vorhandensein oder einem Nichtvorhandensein des Erkennungssignals zu bestimmen, ob das Wischmodul (14) auf dem Körper (11) angeordnet ist.

10. Reinigungsroboter (1) nach Anspruch 5, wobei das Stützelement beweglich mit dem Körper (11) verbunden ist, und ein Abstand zwischen dem Stützelement und der Oberseite des Körpers (11), wenn sich das Wischmodul (14) in der zweiten Position befindet, größer ist als ein Abstand zwischen dem Stützelement und der Oberseite des Körpers (11), wenn sich das Wischmodul (14) in der ersten Position befindet.

11. Reinigungsroboter (1) nach Anspruch 2, wobei der Hubmechanismus einen beweglichen Stützmechanismus umfasst, und der bewegliche Stützmechanismus das Stützelement und den Körper (11) verbindet; wobei die Steuervorrichtung (30) den beweglichen Stützmechanismus zum Antreiben des Stützelements in eine Bewegung zu einer ausgefahrenen Position steuert, so dass das Wischmodul (14) von der ersten Position relativ zu der Arbeitsfläche zu der zweiten Position angehoben wird; und wobei die Steuervorrichtung (30) den beweglichen Stützmechanismus zum Antreiben des Stützelements steuert, so dass es sich zu einer eingefahrenen Position bewegt, so dass das Wischmodul (14) von der zweiten Position relativ zu der Arbeitsfläche zu der ersten Position abfällt.

12. Reinigungsroboter (1) nach Anspruch 1, ferner umfassend eine Erkennungsvorrichtung (10), wobei die Steuervorrichtung (30) dazu ausgelegt ist, gemäß einem Erkennungsergebnis der Erkennungsvorrichtung (10) den Hubmechanismus zum Einstellen einer Position des Wischmoduls (14) relativ zu der Arbeitsfläche zu steuern.

13. Reinigungsroboter (1) nach Anspruch 12, wobei die Erkennungsvorrichtung (10) einen Umgebungserkennungssensor und/oder einen Selbstzustandserkennungssensor umfasst, optional wobei, wenn der Umgebungserkennungssensor erkennt, dass der Reinigungsroboter (1) eine Basisstation (2) erreicht, die Steuervorrichtung (30) den Hubmechanismus zum Anheben des Wischmoduls (14) zu der zweiten Position steuert.

14. Steuerverfahren für einen Reinigungsroboter (1), wobei der Reinigungsroboter (1) umfasst: einen Körper (11); eine Bewegungsvorrichtung (40), die dazu ausgelegt ist, den Körper (11) zu stützen und den Reinigungsroboter (1) in eine Bewegung anzutreiben; eine Reinigungsvorrichtung (50), die dazu ausgelegt ist, auf dem Körper (11) montiert zu sein und Reinigungsarbeit auf einer Arbeitsfläche durchzuführen; eine Steuervorrichtung (30), die dazu ausgelegt ist, die Bewegungsvorrichtung (40) zum Antreiben des Reinigungsroboters (1) in eine Bewegung zu steuern; und eine Leistungsvorrichtung (70), die dazu ausgelegt ist, die Bewegungsvorrichtung (40) mit Leistung zu versorgen; wobei die Reinigungsvorrichtung (50) ein Wischmodul (14) umfasst, und das Wischmodul (14) abnehmbar auf dem Körper (11) montiert ist; und wobei das Steuerverfahren die folgenden Schritte umfasst:
Starten des Reinigungsroboters (1), so dass er in einen Arbeitszustand eintritt, und Steuern des Wischmoduls (14), so dass es sich in einer ersten Position relativ zu der Arbeitsfläche befindet; und
Bestimmen, ob das Wischmodul (14) ausgetauscht werden muss, und wenn das Wischmodul (14) ausgetauscht werden muss, Steuern des Wischmoduls (14), so dass es von der ersten Position relativ zu der Arbeitsfläche zu einer zweiten Position angehoben wird.

15. Steuerverfahren für einen Reinigungsroboter (1) nach Anspruch 14, ferner umfassend:
Bereitstellen eines Stützpunkts, der relativ zu der Arbeitsfläche ist und der sich von der Bewegungsvorrichtung (40) unterscheidet, während das Wischmodul (14) von der ersten Position relativ zu der Arbeitsfläche zu einer zweiten Position angehoben wird.

## Revendications

1. Robot de nettoyage (1), comprenant : un corps (11) ;
un dispositif de déplacement (40), configuré pour supporter le corps (11) et entraîner le robot de nettoyage (1) pour qu'il se déplace sur une surface de travail ;
un dispositif de nettoyage (50), configuré pour être monté sur le corps (11) et réaliser un travail de nettoyage sur la surface de travail ;
un dispositif de commande (30), configuré pour commander le dispositif de déplacement (40) pour entraîner le robot de nettoyage (1) pour qu'il se déplace ; et
un dispositif d'alimentation électrique (70), configuré pour effectuer l'alimentation électrique au dispositif de déplacement (40), dans lequel
le dispositif de nettoyage (50) comprend un module de lavage de sol (14), et le module de lavage de sol (14) est monté de façon détachable sur le corps (11) ; le robot de nettoyage (1) comprend en outre un dispositif de levage, le dispositif de levage comprend un mécanisme de levage, et le dispositif de commande (30) est configuré pour commander le mécanisme de levage pour qu'il lève le module de lavage de sol (14) depuis une première position relative à la surface de travail jusqu'à une deuxième position ; et le dispositif de commande (30) est configuré pour commander le module de lavage de sol (14) pour qu'il soit séparé du corps (11) dans au moins la deuxième position.

2. Robot de nettoyage (1) selon la revendication 1, dans lequel le dispositif de levage comprend un élément de support, dans lequel l'élément de support est configuré pour fournir un point de support qui est relatif à la surface de travail lorsque le module de lavage de sol (14) est levé, et qui est différent du dispositif de déplacement.

3. Robot de nettoyage (1) selon la revendication 1, dans lequel le module de lavage de sol (14) comprend une plaque de lavage de sol, et la plaque de lavage de sol est configurée pour monter un élément d'essuyage de façon détachable.

4. Robot de nettoyage (1) selon la revendication 2, dans lequel une force d'action de l'élément de support sur la surface de travail lorsque le module de lavage de sol (14) est dans la deuxième position est supérieure à une force d'action de l'élément de support sur la surface de travail lorsque le module de lavage de sol (14) est dans le première position.

5. Robot de nettoyage (1) selon la revendication 2, dans lequel le mécanisme de levage comprend un mécanisme de levage de module de lavage de sol configuré pour entraîner le module de lavage de sol (14) pour qu'il soit levé depuis la première position relative à la surface de travail jusqu'à la deuxième position.

6. Robot de nettoyage (1) selon la revendication 5, dans lequel le mécanisme de levage de module de lavage de sol comprend un mécanisme d'élévation, le mécanisme d'élévation comprend un moteur d'élévation (15) et un mécanisme de transmission, et le moteur d'élévation (15) entraîne le mécanisme de transmission pour entraîner le module de lavage de sol (14) pour qu'il se déplace vers le haut ou vers le bas.

7. Robot de nettoyage (1) selon la revendication 1, comprenant en outre un dispositif de déchargement, dans lequel le dispositif de déchargement est disposé sur le corps (11), et le dispositif de commande (30) est configuré pour commander le dispositif de déchargement pour faire en sorte que le module de lavage de sol (14) soit séparé du corps (11) au moins dans la deuxième position.

8. Robot de nettoyage (1) selon la revendication 5, dans lequel un dispositif de saillie est disposé vers le bas sur le corps (11), et, lorsque le dispositif de commande (30) commande le mécanisme de levage de module de lavage de sol pour entraîner le module de lavage de sol (14) pour qu'il soit levé depuis la deuxième position relative à la surface de travail jusqu'à une troisième position de déchargement du module de lavage de sol (14) et soit en contact avec le dispositif de saillie, le dispositif de saillie applique une force vers le bas sur le module de lavage de sol (14), pour que le module de lavage de sol (14) soit séparé du corps (11) dans la troisième position.

9. Robot de nettoyage (1) selon la revendication 1, comprenant en outre un dispositif de détection de module de lavage de sol, dans lequel le dispositif de détection de module de lavage de sol est disposé sur le corps (11) et est configuré pour détecter le fait que le module de lavage de sol (14) est disposé sur le corps (11) ou non et envoyer un signal de détection au dispositif de commande (30), et le dispositif de commande (30) est configuré pour déterminer, sur la base de la présence ou de l'absence du signal de détection, le fait que le module de lavage de sol (14) est disposé sur le corps (11) ou non.

10. Robot de nettoyage (1) selon la revendication 5, dans lequel l'élément de support est raccordé au corps (11) de façon déplaçable, et une distance entre l'élément de support et le haut du corps (11), lorsque le module de lavage de sol (14) est dans la deuxième position, est supérieure à une distance entre l'élément de support et le haut du corps (11) lorsque le module de lavage de sol (14) est dans la première position.

11. Robot de nettoyage (1) selon la revendication 2, dans lequel le mécanisme de levage comprend un mécanisme de support déplaçable, et le mécanisme de support déplaçable raccorde l'élément de support et le corps (11) ; le dispositif de commande (30) commande le mécanisme de support déplaçable pour entraîner l'élément de support pour qu'il se déplace jusqu'à une position étendue, pour que le module de lavage de sol (14) soit levé depuis la première position relative à la surface de travail jusqu'à la deuxième position ; et le dispositif de commande (30) commande le mécanisme de support déplaçable pour entraîner l'élément de support pour qu'il se déplace jusqu'à une position rétractée, pour que le module de lavage de sol (14) descende depuis la deuxième position relative à la surface de travail jusqu'à la première position.

12. Robot de nettoyage (1) selon la revendication 1, comprenant en outre un dispositif de détection (10), dans lequel le dispositif de commande (30) est configuré pour commander, selon un résultat de détection du dispositif de détection (10), le mécanisme de levage pour ajuster une position du module de lavage de sol (14) relative à la surface de travail.

13. Robot de nettoyage (1) selon la revendication 12, dans lequel le dispositif de détection (10) comprend un capteur de détection d'environnement et/ou un capteur de détection d'état intrinsèque, optionnellement dans lequel, lorsque le capteur de détection d'environnement détecte que le robot de nettoyage (1) atteint une station de base (2), le dispositif de commande (30) commande le mécanisme de levage pour qu'il lève le module de lavage de sol (14) jusqu'à la deuxième position.

14. Procédé de commande pour un robot de nettoyage (1), dans lequel le robot de nettoyage (1) comprend : un corps (11) ; un dispositif de déplacement (40), configuré pour supporter le corps (11) et entraîner le robot de nettoyage (1) pour qu'il se déplace ; un dispositif de nettoyage (50), configuré pour être monté sur le corps (11) et réaliser un travail de nettoyage sur une surface de travail ; un dispositif de commande (30), configuré pour commander le dispositif de déplacement (40) pour entraîner le robot de nettoyage (1) pour qu'il se déplace ; et un dispositif d'alimentation électrique (70), configuré pour effectuer l'alimentation électrique au dispositif de déplacement (40) ; le dispositif de nettoyage (50) comprend un module de lavage de sol (14), et le module de lavage de sol (14) est monté de façon détachable sur le corps (11) ; et le procédé de commande comprend les étapes suivantes :
le démarrage du robot de nettoyage (1) pour qu'il entre dans un état de travail, et la commande du module de lavage de sol (14) pour qu'il soit dans une première position relative à la surface de travail ; et
la détermination du fait que le module de lavage de sol (14) doit être remplacé ou non, et, si le module de lavage de sol (14) doit être remplacé, la commande du module de lavage de sol (14) pour qu'il soit levé depuis la première position relative à la surface de travail jusqu'à une deuxième position.

15. Procédé de commande pour un robot de nettoyage (1) selon la revendication 14, comprenant en outre :
la fourniture d'un point de support qui est relatif à la surface de travail et qui est différent du dispositif de déplacement (40), alors que le module de lavage de sol (14) est levé depuis la première position relative à la surface de travail jusqu'à une deuxième position.
